# EUROPEAN PATENT APPLICATION

(11) **EP 4 712 246 A1**
(43) Date of publication of application: **18.03.2026**
(21) Application number: 24889228.3
(22) Date of filing: 28.10.2024
(51) Int. Cl.: H01M 50/367, H01M 50/342, H01M 50/358, H01M 50/211, H01M 50/383, H01M 50/249, H01M 50/251

(54) **BATTERY PACK AND DEVICE INCLUDING SAME**

(30) Priority: 08.11.2023 KR 20230153573; 25.10.2024 KR 20240147344
(71) Applicant: LG Energy Solution, Ltd., Seoul 07335 (KR)
(72) Inventor: LEE, Inje, Daejeon 34122 (KR); SEO, Sung Won, Daejeon 34122 (KR); JUNG, Seyun, Daejeon 34122 (KR); KANG, Jongmo, Daejeon 34122 (KR); HWANG, Taewon, Daejeon 34122 (KR)
(74) Representative: Plasseraud IP
(86) International application number: PCT/KR2024/096399
(87) International publication number: WO 2025/101042

(57) **Abstract**

A battery pack according to certain embodiments of the present disclosure comprises: at least one battery assembly including a plurality of battery cells; and a pack housing that houses the at least one battery assembly, wherein a plurality of venting channels extending along one direction are formed inside a bottom frame of the pack housing, wherein a venting hole communicating with the venting channel is formed on a lower surface of the battery assembly, and wherein the venting channels each have independent venting flow paths that are not shared with each other.

## Description

### [TECHNICAL FIELD]

### Cross-Reference to Related Application(s)

This application claims priority to and the benefit of Korean Patent Application no. KR10-2023-0153573, filed on November 8, 2023, and Korean Patent Application no. KR10-2024-0147344, filed on October 25, 2024, the entire contents of which are incorporated herein by reference.

The present disclosure relates to a battery pack and a device including the same, and more particularly, to a battery pack that can minimize the transition of internal thermal runaway and prevent structural collapse, and a device including the same.

### [BACKGROUND ART]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are arranged, and in case of secondary batteries used for medium- and large-size vehicle devices such as automobiles, a battery module is used, which includes multiple battery cells electrically connected to each other. In the battery module, the multiple battery cells are connected in series or parallel to form a battery cell stack, which improves the capacity and the power. One or more battery modules may be mounted together with various control and protection systems such as a battery management system (BMS), a battery disconnect unit (BDU), and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, safety is one of the most important issues in such a battery pack. In particular, if a thermal event occurs in any one of the plurality of battery cells included in the battery pack, it is necessary to block such events from propagating to other battery cells.

If thermal propagation between battery cells is not properly suppressed, this may lead to thermal events in the other battery cells included in the battery pack, which may cause bigger problems, such as ignition or explosion of the battery pack. Furthermore, the ignition or explosion occurring in a battery pack can cause great damage to human life or property in the surrounding area. Therefore, in the case of a battery pack, a configuration capable of appropriately controlling the above-mentioned thermal event and the propagation of such thermal event is required.

### [DETAILED DESCRIPTION OF THE INVENTION]

### [Technical Problem]

Therefore, it is an object of the present disclosure to provide a battery pack which allows venting gas, particles, flames or the like to move along a specific preplanned path and discharge to the outside of the battery pack, when a thermal event occurs in a specific battery cell, and can prevent the thermal event from propagating to other adjacent battery cells, and a device including the same.

However, the technical objects to be solved by embodiments of the present disclosure are not limited to the above-mentioned objects, and can be variously expanded within the scope of the technical idea included in the present disclosure.

### [Technical Solution]

According to certain aspects of the present disclosure, there is provided a battery pack comprising: at least one battery assembly including a plurality of battery cells; and a pack housing that houses the at least one battery assembly, wherein a plurality of venting channels extending along one direction are formed inside a bottom frame of the pack housing, wherein a venting hole communicating with the venting channel is formed on a lower surface of the battery assembly, and wherein the venting channels each have independent venting flow paths that are not shared with each other.

At least one of the two ends of the venting channel may be provided with a rupture part that is structured to rupture at a prescribed pressure or higher.

A flange part protruding in the direction in which the venting channel is located may be provided on the outer circumference of the venting hole. The flange part may be inserted into the venting flow path of the venting channel.

The venting channel may extend along the longitudinal direction of the battery cell, which is perpendicular to the direction in which the battery cells are stacked.

The number of the battery cells may be greater than the number of the venting channels.

The venting channels may be provided so that the venting channels correspond one by one to each unit of battery cells having a capacity of 50 Ah or more and 300 Ah or less.

The battery assembly may comprise a plurality of battery cell units. The battery cell unit may comprise at least one battery cell and a cell cover that partially wraps around the at least one battery cell. The cell cover may comprise side surface parts that cover one side surface of the battery cell.

Each of the venting channels may be located so as to correspond to each of the battery cell units.

Each of the venting channels may be communicated one to one with each of the battery cell units.

The cell cover may comprise a lower surface part that connects the side surface parts and covers the lower part of at least one battery cell. The lower surface part may be formed with a cell cover venting hole that communicates with the venting hole.

A cell cover flange part protruding in the direction in which the venting channel is located may be provided on the outer circumference of the cell cover venting hole. The flange part may be inserted into the venting flow path of the venting channel.

The cell cover may comprise an upper face part that connects the side surface parts and covers the upper part of at least one battery cell. A portion opened on a lower side of the cell cover may communicate with the venting hole.

The bottom frame may comprise a venting plate on which the battery assembly is placed, and a lower plate located below the venting plate. The venting channels may be formed between the venting plate and the lower plate.

The venting plate may comprise an opening part formed in a portion corresponding to the venting hole. The venting hole may communicate with the venting channel through the opening part.

A flange part protruding in the direction in which the venting channel is located may be provided on the outer circumference of the venting hole. The flange part may be inserted into the venting flow path of the venting channel while passing through the opening part.

A venting unit may be located between the venting plate and the lower plate. The venting channels may be formed in the venting unit. The venting unit may have a shape in which the plate materials extend in a zigzag manner, so that the upper opening area and the lower opening area are alternately located along the direction in which the battery cells are stacked.

Any one of the venting channels may be formed while the upper opening area is covered by the venting plate. The other venting channels may be formed while the lower opening area is covered by the lower plate.

A venting space may be provided between the venting plate and the lower plate. The pack housing may comprise a discharge part that communicates with the venting space.

The venting space may be a space excluding the venting channels between the venting plate and the lower plate.

The gas generated in the battery cell may pass through the venting channel and the venting space in sequence and be discharged to the outside through the discharge part. The gas may flow while being bent at least once in the venting space.

The pack housing may comprise side parts that extend along the edge of the bottom frame. Any one of the sides may be provided with an inner hollow that communicates between the discharge part and the venting space.

A venting extension part communicating with the discharge part may be located in the venting space.

The venting extension part may be a tubular member having an inflow port and a discharge port.

The inner space of the venting extension part may be formed with a flow path that extends while being bent in a plural number.

According to certain other aspects of the present disclosure, there is provided a device comprising the above-mentioned battery pack.

### [Advantageous Effects]

According to certain embodiments of the present disclosure, when a thermal event occurs in a battery cell, high-temperature venting gas, particles, flames or the like ejected from the battery cell move along a specific preplanned path to be discharged to the outside of the battery pack. At this time, since the venting channels through which the venting gas, particles, flames or the like flow have independent venting flow paths that are not shared with each other, it is possible to minimize the propagation of thermal events generated in a specific battery cell to other battery cells.

The effects of the present disclosure are not limited to the effects mentioned above, and additional other effects not described above will be clearly understood from the description of the appended claims by those skilled in the art.

### [BRIEF DESCRIPTION OF THE DRAWINGS]

FIG. 1 is an exploded perspective view showing a battery pack according to certain embodiments of the present disclosure.
FIG. 2 is a cross-sectional view showing a cross section cut along the cutting line A-A' of FIG. 1.
FIG. 3 is a partially enlarged cross-sectional view showing a section "B" of FIG. 2.
FIG. 4 is a perspective view showing a battery assembly included in the battery pack of FIG. 1.
FIG. 5 is an exploded perspective view of the battery assembly of FIG. 4.
FIG. 6 is a perspective view showing a battery cell stack included in the battery assembly of FIG. 4.
FIG. 7 is a plan view showing one of the battery cells included in the battery cell stack of FIG. 6.
FIG. 8 is a perspective view showing cell covers and pads included in the battery cell stack of FIG. 6.
FIG. 9 is an exploded perspective view of a battery cell unit included in the battery cell stack of FIG. 6.
FIG. 10(a) is a perspective view of the cell cover of FIG. 9 as viewed from a different angle, and FIG. 10(b) is a cross-sectional view taken along the cutting line C-C' of FIG. 9.
FIG. 11 is a partially enlarged perspective view showing a lower surface of the lower frame of the battery assembly according to certain embodiments of the present disclosure.
FIG. 12 is a plan view showing a lower surface of the lower frame of the battery assembly according to certain embodiments of the present disclosure.
FIG. 13 is a cross-sectional view taken along the cutting line D-D' of FIG. 12.
FIG. 14 is a perspective view showing a busbar frame and a busbar according to certain embodiments of the present disclosure.
FIG. 15 is a perspective view showing a pack housing included in a battery pack according to certain embodiments of the present disclosure.
FIG. 16 is a perspective view showing only the first side frame and the bottom frame among the pack housings according to certain embodiments of the present disclosure.
FIG. 17 is a perspective view showing a state in which the inner frame of the first side frame in FIG. 16 is removed.
FIG. 18 is an exploded perspective view of the first side frame and the bottom frame in FIG. 17.
FIG. 19 is a partially enlarged perspective view showing a section "E" in FIG. 17.
FIG. 20 is a perspective view showing a state in which the venting plate is removed in FIG. 17.
FIG. 21 is a cross-sectional view showing a cross section taken along the cutting line F-F' of FIG. 17.
FIG. 22 is a perspective view showing a venting unit, a venting channel plate, and a venting flap according to certain embodiments of the present disclosure.
FIG. 23 is an exploded perspective view of a venting unit, a venting channel plate, and a venting flap in FIG. 22.
FIG. 24 is a cross-sectional view showing a cross section taken along the cutting line G-G' of FIG. 23.
FIGS. 25(a) and (b) are partial diagram showing a state in which the venting channel plate and the venting flap of FIG. 23 are combined and a state in which they are separated from each other, respectively.
FIG. 26 is a partial drawing showing a rupture part according to certain other embodiments of the present disclosure.
FIG. 27 is a perspective view showing an outer frame of the first side part, a venting extension part, and the lower plate of the bottom frame according to certain embodiments of the present disclosure.
FIGS. 28 and 29 are perspective views showing the path along which gas or flame discharged from the venting unit moves according to certain embodiments of the present disclosure.
FIG. 30 is a cross-sectional perspective view taken along the cutting line I-I' of FIG. 16.
FIG. 31 is a perspective view showing a venting extension part according to certain embodiments of the present disclosure.
FIG. 32 is an exploded perspective view of the venting extension part of FIG. 31.
FIG. 33 is a perspective view showing a labyrinth bracket included in the venting extension part of FIG. 31.
FIG. 34 is a cross-sectional view showing a cross section taken along the cutting line J-J' of FIG. 31.
FIG. 35 is an exploded perspective view showing a battery cell unit according to certain other embodiments of the present disclosure.
FIG. 36 is a cross-sectional view of a cell cover according to certain other embodiments of the present disclosure.
FIG. 37 is a cross-sectional view of a battery pack to which the cell cover of FIG. 36 is applied.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

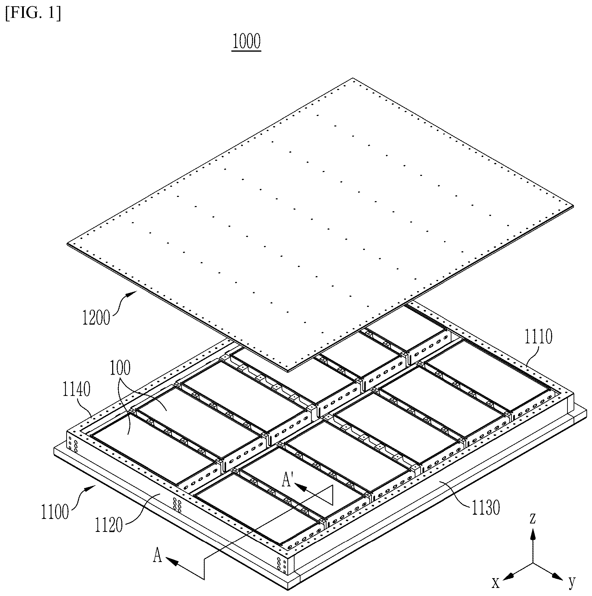

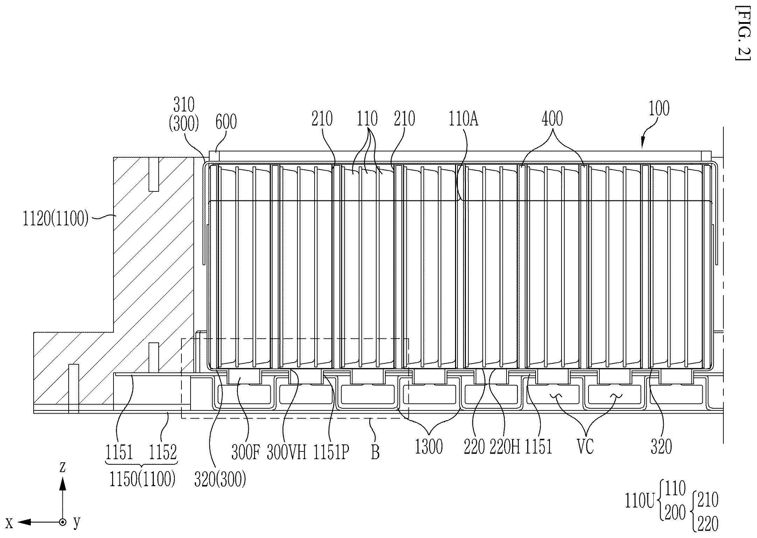

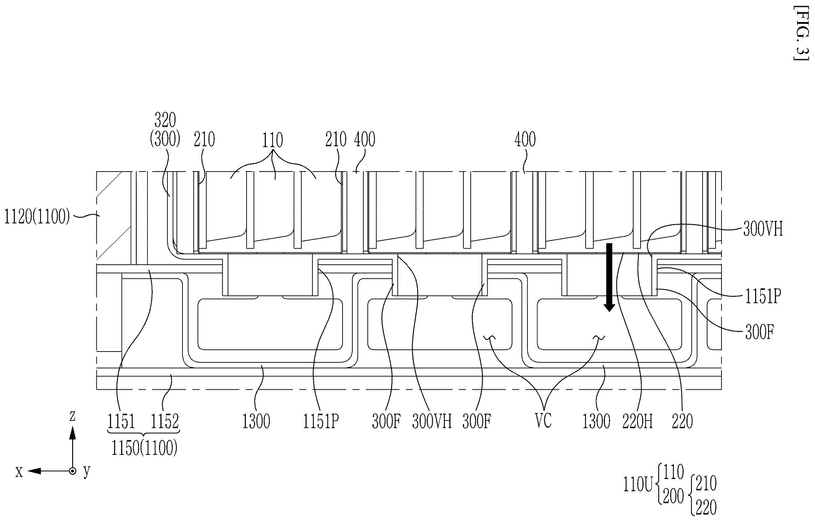

FIG. 1 is an exploded perspective view showing a battery pack according to certain embodiments of the present disclosure. FIG. 2 is a cross-sectional view showing a cross section cut along the cutting line A-A' of FIG. 1. FIG. 3 is a partially enlarged cross-sectional view showing a section "B" of FIG. 2.

Referring to FIGS. 1 to 3, a battery pack 1000 according to certain embodiments of the present disclosure includes at least one battery assembly 100 including a plurality of battery cells 110; and a pack housing 1100 that houses at least one battery assembly 100. A plurality of venting channels VC extending along one direction are formed in the inside of the pack housing 1100, and a venting hole 300VH communicating with the venting channels VC is formed on the lower surface of the battery assembly 100. The venting channels VC each have independent venting flow paths that are not shared with each other.

When it is in a situation where a thermal event occurs in a specific battery cell 110 and high-temperature gas, particles or flames are ejected from the battery cell 110, the gas, particles, or flames flow into the venting channel VC from the battery cell 110. Here, the particles may be metal particles. The venting channels VC do not share space with each other and may have independent venting flow paths. Thus, high-temperature gas, particles, or flames passing through any one venting channel VC do not propagate to other adjacent venting channels VC. Thereby, it is possible to minimize the propagation of a thermal event occurring in a specific battery cell 110 to other battery cells 110.

The structure of the battery pack according to the present embodiment will be described in more detail below.

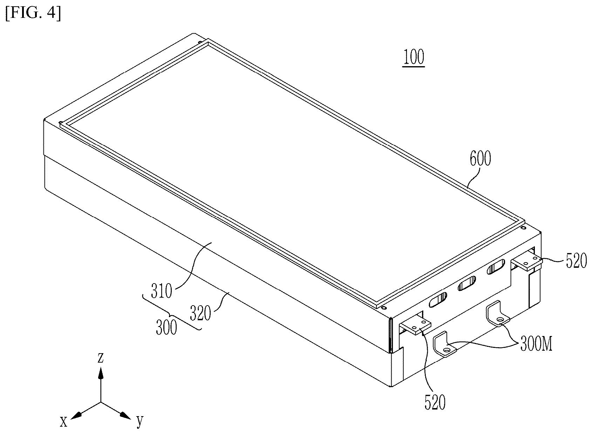

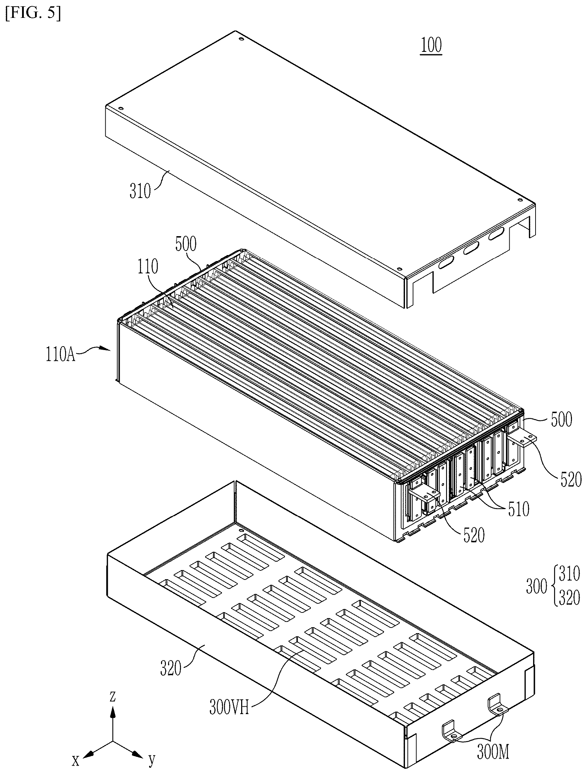

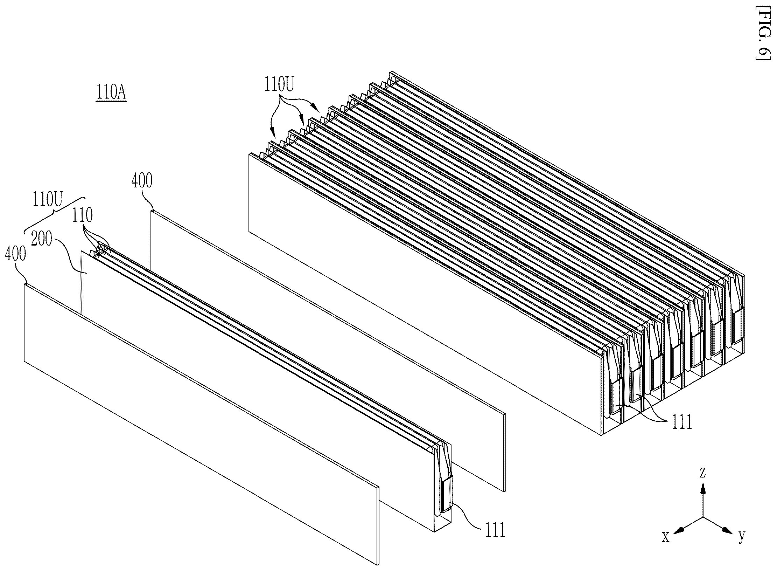

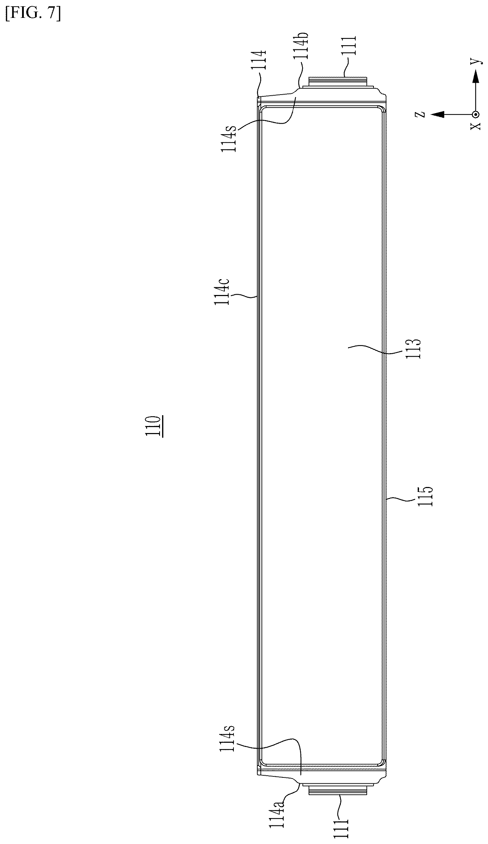

FIG. 4 is a perspective view showing a battery assembly included in the battery pack of FIG. 1. FIG. 5 is an exploded perspective view of the battery assembly of FIG. 4. FIG. 6 is a perspective view showing a battery cell stack included in the battery assembly of FIG. 4. FIG. 7 is a plan view showing one of the battery cells included in the battery cell stack of FIG. 6.

Referring to FIGS. 1, 2, and FIGS. 4 to 7, the battery cells 110 according to the present embodiment may be stacked along one direction to form a battery cell stack 110A. Below, the battery cell 110 will first be described.

The battery cell 110 according to the present embodiment may be various types of battery cells, for example, a pouch-type battery cell, a prismatic battery cell, or a cylindrical battery cell. As an example, as shown in FIG. 7, the battery cell 110 according to the present embodiment may be a pouch-type battery cell. Below, a pouch-type battery cell will be described, but the battery cell 110 according to the present embodiment is not limited thereto, and various types of battery cells may be applied thereto.

The battery cell 110 according to the present embodiment may have a structure in which an electrode assembly having electrode leads 111 protruding in one direction or both directions is housed in a pouch case 114. Such battery cells 110 may have a rectangular sheet shape. The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end 114a and the other end 114b of the cell main body 113. As another example, a structure in which all the electrode leads 111 of the battery cells 110 protrude in one direction is also possible. One of the electrode leads 111 is a positive electrode lead, and the other is a negative electrode lead.

The battery cell 110 can be produced by adhering both end parts 114a and 114b of a pouch case 114 and one side part 114c connecting them in a state in which an electrode assembly (not shown) is housed in a pouch case 114. In other words, the battery cell 110 according to certain embodiments of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiment may be a pouch-type secondary battery in which the electrode assembly is housed inside the pouch case 114 and the outer peripheral side of the pouch case 114 is sealed to form a sealing part 114s. In FIG. 7, only a state in which the sealing parts 114s are formed at both end parts 114a and 114b of the pouch case 114 are shown, and the sealing part is not shown on the side facing the folding part 115, however, the sealing part on the side facing the folding part 115 may be in a state being folded to one side after sealing is completed for space utilization.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be thermally fused to each other by heat and/or pressure applied in a state in which the electrode assembly is embedded. This inner resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part 114s. The pouch case is sealed in this manner, so that the battery cell 110, which is a pouch-type secondary battery, can be produced.

A plurality of battery cells 110 may be configured within the battery cell stack 110A. The plurality of battery cells 110 may be stacked so that they can electrically connected to each other. As an example, the plurality of battery cells 110 may be stacked along a direction parallel to the x-axis while standing upright. Thereby, the electrode leads 111 may protrude in a direction perpendicular to the direction in which the battery cells 110 are stacked. In the battery cell 110, one electrode lead 111 may protrude toward the y-axis direction, and the other electrode lead 111 may protrude toward the -y-axis direction. If the electrode leads 111 are battery cells that protrude only in one direction, the electrode leads 111 may protrude in the y-axis direction or the -y-axis direction.

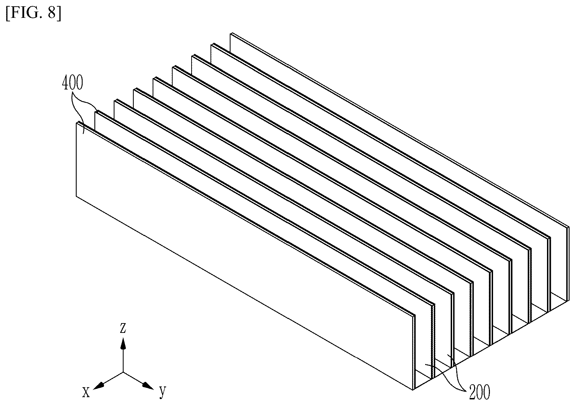

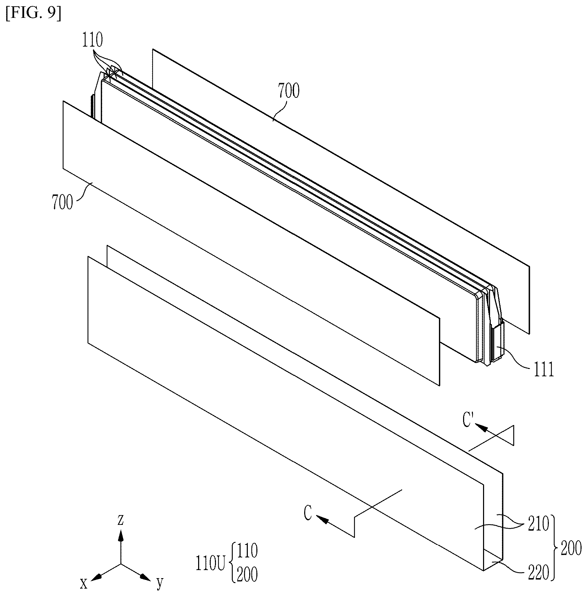

FIG. 8 is a perspective view showing cell covers and pads included in the battery cell stack of FIG. 6. FIG. 9 is an exploded perspective view of a battery cell unit included in the battery cell stack of FIG. 6.

Referring to FIGS. 5 to 9 together, in the battery cell stack 110A according to the present embodiment, the battery cells 110 may be stacked to form a battery cell unit 110U. Specifically, the battery assembly 100 according to the present embodiment may include a plurality of battery cell units 110U, and the battery cell unit 110U may include at least one battery cell 110 and a cell cover 200 that partially wraps around the at least one battery cell 110.

That is, according to the present embodiment, the battery cell unit 110U may be formed while one or more battery cells 110 are arranged inside the cell cover 200, and the battery cell stack 110A may be formed while such battery cell units 110U are stacked along one direction.

A single or a plurality of the battery cells 110 may be configured in the battery cell unit 110U. As an example, FIG. 9 shows that a battery cell unit 110U includes three battery cells 110. A plurality of battery cells 110 may be stacked so that they can be electrically connected to each other. In particular, a plurality of battery cells 110 may be stacked along a direction parallel to the x-axis while standing upright so that one surfaces of the cell body 113 face each other within the battery cell unit 110U.

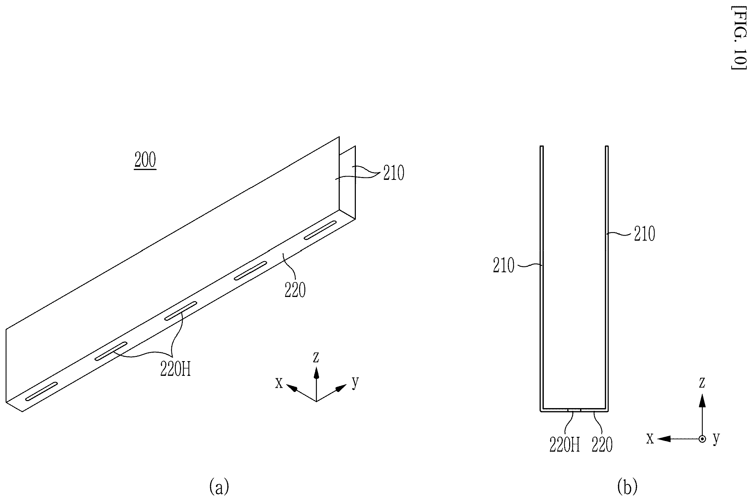

FIG. 10(a) is a perspective view of the cell cover of FIG. 9 as viewed from a different angle, and FIG. 10(b) is a cross-sectional view taken along the cutting line C-C' of FIG. 9.

Referring to FIGS. 2, 6, 8, 9, and FIG. 10 to (a) and (b), the cell cover 200 according to the present embodiment may include side surface parts 210 that cover one side surface of the battery cell 110. In addition, the cell cover 200 may include a lower surface part 220 that connects the side surface parts 210 and covers the lower part of at least one battery cell 110.

The cell cover 200 may include two side surface parts 210 and one lower surface part 220. One surface of the side surface parts 210 and one surface of the lower surface part 220 may be vertical, and the side surface parts 210 may extend upward from both opposing surfaces of the lower surface part 220, respectively. The cell cover 200 according to the present embodiment may have a configuration in which an upper side is opened. That is, when the cell cover 200 is cut along the xz plane in FIG. 9, the cell cover 200 may have a 'U' shape. The cell cover 200 may be provided so as to wrap at least some of three of the remaining four surfaces except two surfaces on which the electrode leads 111 are formed, in the six-sided battery cell 110.

The battery cells 110 are located between the side surface parts 210 of the cell covers 200, so that the battery cells 110 in the battery cell stack 110A can be divided into battery cell units 110U. The battery cells 110 in the battery cell stack 110A are divided into battery cell units 110U using the cell covers 200, so that the propagation of a thermal event or thermal runaway can be delayed. Even if a thermal event or thermal runaway occurs in any one of the battery cells 110, the side surface parts 210 of the cell covers 200 are located in the direction in which the battery cells 110 are stacked, thereby blocking the thermal event or thermal runaway from propagating to the battery cells 110 of the adjacent other battery cell units 110U.

The cell cover 200 can not only delay thermal runaway phenomena, but also supplement the rigidity of the battery cells 110, thereby enabling the battery cells 110 to maintain in an upright state. The cell cover 200 can cover at least a part of the battery cells 110 to support the battery cells 110, and stably maintain the stacked state of the battery cells 110 arranged to erect in one direction. More specifically, the side surface parts 210 of the cell cover 200 may support the side surface of the battery cells 110, thereby maintaining the upright state of the battery cell 110.

The cell cover 200 can be made from a material that has a high melting point so as not to melt even in the event of a thermal runaway and can block the propagation of a thermal event or thermal runaway. The cell cover 200 can also be made from a material having a mechanical strength above a predetermined range so as to stably support the battery cell 110, thereby protecting the battery cell 110 from external impact, etc. The material used for the cell cover 200 is not particularly limited, but as an example, it may include at least one of a mica material, steel, aluminum (Al), or plastic material.

In addition, in order to maintain the battery cell 110 in an upright state within the cell cover 200, an adhesive foil 700 may be further disposed between the battery cells 110 and the side surface part 210 of the cell cover 200. The material or shape of the adhesive foil 700 is not particularly limited as long as it can exhibit an adhesive function. For example, the adhesive foil 700 may be a double-sided tape, and such a double-sided tape may be one in which an acrylic material is applied to a polyethylene terephthalate (PET) substrate, or one including an acrylic material. Furthermore, the adhesive foil 700 according to certain other embodiments may be a spray-type adhesive, and such a spray-type adhesive may include a synthetic rubber.

A pad 400 may be interposed between the battery cell units 110U, i.e., between the cell covers 200. Further, a pad 400 may be interposed even on the outer surface of the cell cover 200 of the outermost battery cell unit 110U. This pad 400 may function as a thermal barrier that can block the propagation of a thermal event or thermal runaway. In other words, the material of the pad 400 according to the present embodiment is not particularly limited as long as it can exhibit a predetermined thermal insulation performance. For example, the pad 400 may include a silicon (Si) material or an aerogel material.

On the other hand, the lower surface part 220 of the cell cover 200 according to the present embodiment may be formed with a cell cover venting hole 220H. When high-temperature gas, particles, or flames are generated in any one of the battery cells 110 due to a thermal event, it is possible to prevent the high-temperature gas, particles, or flames from propagating to the adjacent battery cell 110 by the side surface part 210 of the cell cover 200, as mentioned above. The high-temperature gas, particles, or flames can be discharged through the cell cover venting hole 220H formed in the lower surface part 220. This cell cover venting hole 220H may be communicated with a venting hole 300VH provided in the lower surface of the battery assembly 100. This will be described in detail later.

Next, a structure in which venting is induced downward in the battery pack according to the present embodiment will be described in detail.

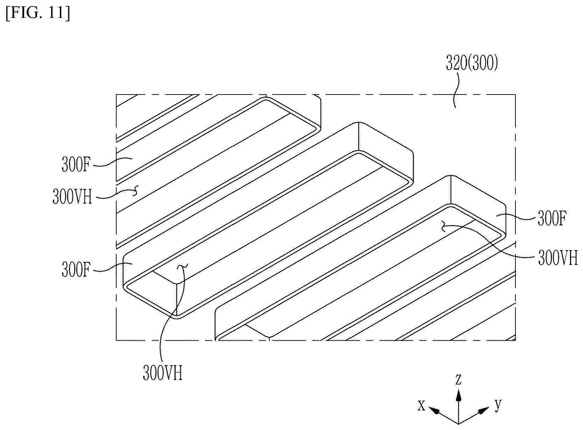

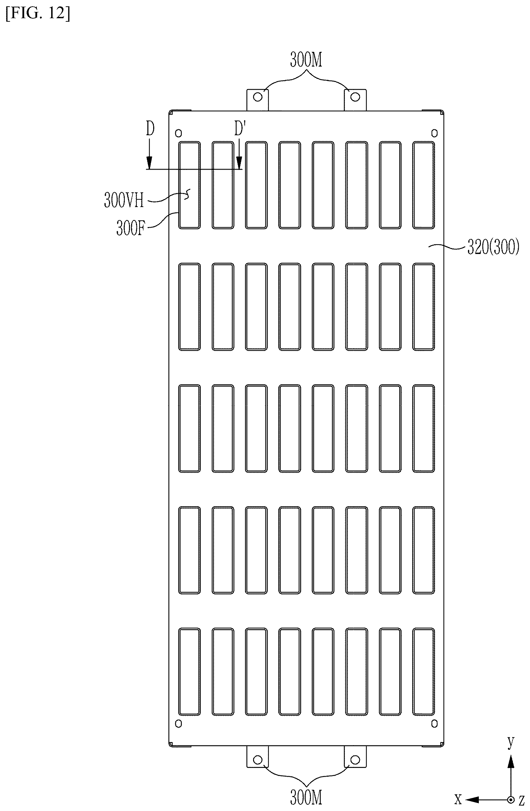

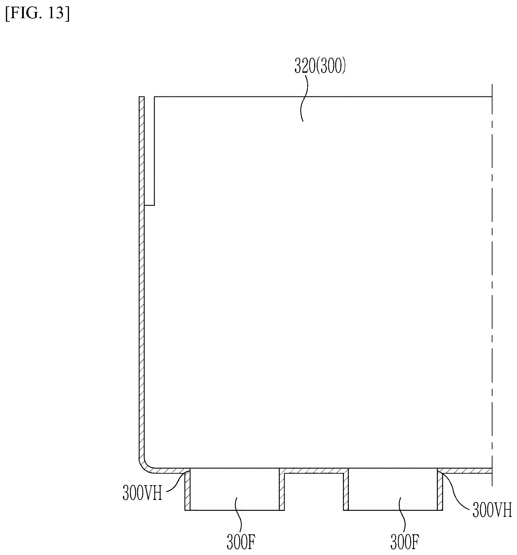

FIG. 11 is a partially enlarged perspective view showing a lower surface of the lower frame of the battery assembly according to certain embodiments of the present disclosure. FIG. 12 is a plan view showing a lower surface of the lower frame of the battery assembly according to certain embodiments of the present disclosure. FIG. 13 is a cross-sectional view taken along the cutting line D-D' of FIG. 12.

Referring to FIG. 5 and FIGS. 11 to 13 together, the battery assembly 100 according to the present embodiment may further include a module frame 300 in which a battery cell stack 110A is housed. The module frame 300 may include an upper frame 310 and a lower frame 320, and the battery cell stack 110A may be housed in an inner space formed by the upper frame 310 and the lower frame 320.

As mentioned above, the lower surface of the battery assembly 100 may be formed with a venting hole 300VH that communicates with the venting channel VC inside the pack housing 1100. Specifically, the lower surface of the lower frame 320 may be formed with a venting hole 300VH. Further, the module frame 300 may include a mounting part 300M for fixing the battery assembly 100 to the bottom frame 1150 of the pack housing 1100. As an example, a mounting hole is formed in the mounting part 300M, and the battery assembly 100 may be fixed while the mounting bolts pass through the mounting hole and fasten to the bottom frame 1150.

Referring to FIGS. 1, 2, 3, 5, 7, and FIGS. 11 to 13, a plurality of venting channels VC extending along one direction are formed inside the pack housing 1100 as mentioned above, and the venting channels VC each have independent venting flow paths that are not shared with each other. The plurality of venting channels VC extending along one direction means that the independent venting flow path possessed by each of the venting channels VC extends along the one direction.

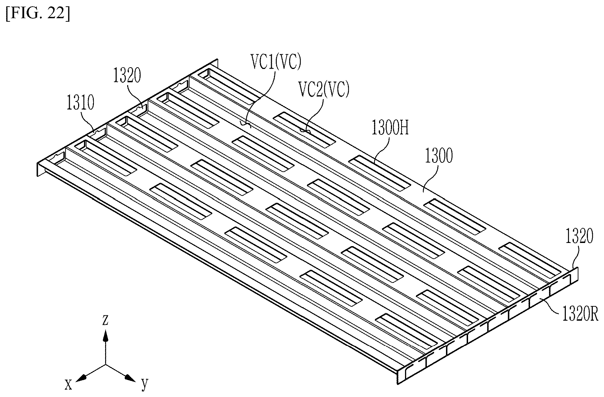

The venting channels VC may extend along the longitudinal direction of the battery cells 110, which is perpendicular to the direction in which the battery cells 110 are stacked. Here, the direction in which the battery cells 110 are stacked may be a direction parallel to the x-axis, and the longitudinal direction of the battery cell 110 perpendicular thereto may be a direction parallel to the y-axis, which is the direction in which the electrode lead 111 protrudes from the battery cell 110. The extension direction of the venting channels VC will be described again with reference to FIG. 22, and the like.

The pack housing 1100 includes a bottom frame 1150 on which the battery assembly 100 is placed, and a plurality of venting channels VC may be formed inside the bottom frame 1150. Furthermore, an opening part 1151P is formed in the bottom frame 1150, so that high-temperature gas, particles, or flames generated at the time of a thermal event of the battery cell 110 may be guided into the inside of the venting channel VC. Specifically, a venting hole 300VH formed in the lower frame 320 of the module frame 300 may communicate with the venting channel VC through the opening part 1151P of the bottom frame 1150. In addition, in the battery cell unit 110U according to the present embodiment, the cell cover venting hole 220H formed in the cell cover 200 may communicate with the venting hole 300VH. That is, the venting hole 300VH may be located corresponding to the opening part 1151P, and the cell cover venting hole 220H may be located corresponding to the venting hole 300VH.

As a result, when it is in a situation where a thermal event occurs in a specific battery cell 110 and high-temperature gas, particles or flames are ejected from the battery cell 110, the gas, particles or flames may pass through the cell cover venting hole 220H, the venting hole 300VH and the opening part 1151P and flow into the venting channels VC inside the bottom frame 1150 of the pack housing 1100. The gas, particles or flames flowing into the venting channels VC are discharged to the outside of the battery pack 1000. The battery pack 1000 according to the present embodiment has a "bottom vent" structure that allows high-temperature gas, particles, or flames generated inside the battery assembly 100 to be discharged to the outside using the bottom frame 1150 of the pack housing 1100. As will be described later, a high-voltage current path, such as the HV (high voltage) connection of the terminal busbar, exists in the upper area of the battery assembly 100. Here, the HV connection is a connection that serves as a power source for supplying electric power requiring high voltage, and means a connection between battery cells or a connection between battery assemblies. At this time, if high-temperature gas, particles or the like due to a thermal event of the battery cell, touch with a high-voltage path such as the HV connection, a short circuit or arc discharge may occur, which may lead to additional explosion and flame generation. On the other hand, in the case of the battery pack according to the present embodiment, since it has a "bottom vent" structure as mentioned above, high-temperature gas or particles caused by a thermal event are discharged downward, i.e., to the bottom frame 1150 of the pack housing 1100. Therefore, high-temperature gas or particles, etc. are likely to touch a high-voltage path such as the HV connection, which can ultimately increase safety against thermal runaway phenomena.

Meanwhile, in the battery assembly 100 according to certain embodiments of the present disclosure, the battery cells 110 may be arranged so that the folding part 115 of the battery cell 110 faces upward and the one side part 114c of the battery cell 110 faces downward. That is, the battery cells 110 may be arranged so that the folding part 115 of the battery cell 110 faces upward and the sealing part 114s of the one side part 114c of the battery cell 110 faces downward.

The lower end of the battery cell 110 may be a sealing part 114s where the pouch case 114 is sealed, and the upper end of the battery cell 110 may be a folding part 115 where the pouch case 114 is folded, rather than a portion where sealing is made. Thereby, the battery cell 110 may be arranged so that the sealing part 114s of the battery cell 110 faces the venting channel VC inside the pack housing 1100. In addition, the sealing part 114s of the battery cell 110 may be arranged so as to face the cell cover venting hole 220H of the cell cover 200. Referring to FIG. 7, a sealing part 114s is provided on one side part 114c of a battery cell 110, and the battery cell 110 of FIG. 7 may be located in a battery assembly 100 in an inverted state so that the sealing part 114s of the one side part 114c faces downward and the folding part 115 of the battery cell 110 faces upward.

When a thermal event or thermal runaway occurs in the battery cell 110, venting gas is generated in the battery cell 110 and the internal pressure of the battery cell 110 increases. This venting gas can be mainly discharged through the sealing part 114s of the battery cell 110. That is, due to the increased internal pressure, the sealing is released from partial portions of the sealing part 114s, and the venting gas, and the like can be discharged through the portion of the sealing part 114s where the sealing is released.

In the battery assembly 100 according to the present embodiment, the battery cell 110 may be arranged so that the lower end of the battery cell 110 forms the sealing part 114s and the upper end of the battery cell 110 forms the folding part 115. This configuration makes it possible to more clearly realize a "lower venting" structure that discharges venting gas, particles, and the like generated in the battery cell 110 in a downward direction.

The venting channels VC each have independent venting flow paths that are not shared with each other. Therefore, gas, particles, or flames are flowed into any one venting channel VC communicating with the battery cell 110 in which a thermal event is occurred, however, such gas, particles, flames, or the like do not propagate to other adjacent vent channels VC. Therefore, gas, particles, or flames are not flowed into other battery cells 110 that communicate with other venting channels VC, and ultimately a thermal event is not propagated or triggered to other battery cells 110.

Each of the venting channels VC may be located as so to correspond to each of the battery cell units 110U. Each of the venting channels VC may be communicated one to one with each of the battery cell units 110U. That is, the number of venting channels VC may match with the number of battery cell units 110U in the battery cell stack 110A, and any one of the battery cell units 110U may communicate only with the venting channel VC located at a lower part thereof, and may not communicate with the other venting channels VC.

High-temperature gas and flame generated in any one of the battery cell units 110U are discharged only through the venting channel VC communicating therewith, and movement to other venting channels VC is restricted. As mentioned above, in the battery cell stack 110A according to the present embodiment, the battery cells 110 can be housed in the cell cover 200 to form a battery cell unit 110U. High-temperature gas or flame resulting from thermal runaway phenomena generated from one battery cell unit 110U is blocked by the side surface part 210 of the cell cover 200, and is prevented from propagating to other adjacent battery cell units 110U.

When high-temperature gas or flame is discharged to the venting channel VC corresponding one-to-one to the upper part of the battery cell unit 110U, the venting channels VC each have independent venting flow paths that are not shared with each other, so that the high-temperature gas or flame does not flow into adjacent other venting channels VC. Therefore, there is no risk of the high-temperature gas or flame reversely flowing into adjacent other venting channels VC and the other battery cell unit 110U located above it. If the venting flow paths of the venting channels VC are shared with each other, the battery cell unit 110U where the thermal runaway phenomenon does not occur has a relatively lower internal pressure than the battery cell unit 110U where the thermal runaway phenomenon occurred, so there is a risk of the high-temperature gas or flame flowing into its inside. In the present embodiment, a separate venting flow path is realized for each battery cell unit 110U, thereby minimizing the transition of thermal runaway between battery cells 110 and preventing structural collapse of the battery pack.

In the battery pack 1000 according to the present embodiment, the number of battery cells 110 may be greater than the number of venting channels VC. The battery cell unit 110U may include a plurality of battery cells 110 and a cell cover that partially wraps around the battery cells 110. A plurality of battery cells 110 in the battery cell unit 110U may be covered by a cell cover 200. Each of the venting channels (VC) may be located so as to correspond to each of the battery cell units 110U. One of the venting channels VC may correspond to multiple battery cells 110 in the battery cell unit 110U. Therefore, the number of battery cells 110 may be greater than the number of venting channels VC.

If the number of battery cells 110 and the number of venting channels VC are set to be equal so that one venting channel VC corresponds to each individual battery cell 110, it is necessary to provide a large number of independent venting channels VC, which is structurally complex and inefficient. Thus, in the present embodiment, multiple battery cells 110 are bundled to form a battery cell unit 110U, and each of the venting channels VC is provided so as to correspond to each of the battery cell units 110U, thereby efficiently realizing an independent venting channel VC.

As an example, in the battery pack 1000 according to the present embodiment, mutually independent venting channels VC may be provided so that one venting channel VC corresponds to each unit of battery cells 110 having a capacity of 50 Ah or more and 300 Ah or less. Forming the venting channels VC based on the capacity unit of the battery cells 110 in this manner may be more effective in realizing independent venting channels VC than when one venting channel VC is set to correspond to each individual battery cell 110.

As another example, in the battery pack 1000 according to the present embodiment, mutually independent venting channels VC may be provided so that one venting channel VC corresponds to each unit of battery cells 110 having a thickness of 8 mm or more and 30 mm or less. Forming the venting channel VC based on the thickness unit of the battery cell 110 in this manner can be more effective in realizing independent venting channels VC than when one vent channel VC is set so as to correspond to each individual battery cell 110. The thickness of 8 mm or more and 30 mm or less can be a thickness range corresponding to the sum of the width-direction thicknesses of the battery cells 110 provided in one battery cell unit 110U.

Meanwhile, according to the present embodiment, a flange part 300F protruding in the direction where the venting channel VC is located may be provided on the outer circumference of the venting hole 300VH. This flange part 300F may be inserted into the venting flow path of the venting channel VC. More specifically, the flange part 300F can be inserted into the venting flow path of the venting channel VC while passing through the opening part 1151P of the bottom frame 1150.

In FIGS. 11 to 13, the shape of the flange part 300F formed on the lower frame 320 of the module frame 300 is shown. The flange part 300F may extend along the outer circumference of the venting hole 300VH and protrude in a downward direction perpendicular to one surface of the lower frame 320. FIGS. 2 and 3 show a state in which when the battery assembly 100 is disposed on the bottom frame 1150 of the pack housing 1100, the flange part 300F formed on the lower surface of the battery assembly 100 is inserted into the venting flow path of the venting channel VC while passing through the opening part 1151P.

Although the venting hole 300VH is communicated with the venting flow path of the venting channel VC, high-temperature gas, particles or flames discharged through the venting hole 300VH may reversely flow in the direction where the battery cell 110 is located, and may flow out through a gap between the venting hole 300VH and the opening part 1151P. This may cause another thermal event in the adjacent battery cells 110, and ultimately the flame may spread to the entire battery assembly 100 and battery pack 1000. In addition, the impact generated when the battery cell 110 ignites may cause deformation on the contact surface between the battery assembly 100 and the bottom frame 1150. In this case, the possibility of high-temperature gas, particles or flames flowing out through a gap between the venting hole 300VH and the opening part 1151P increases, and the gas or flames may reversely flow into the adjacent other battery cell units 110U. Even in this case, the flames may also spread to the whole of the battery assembly 100 and battery pack 1000.

In order to prevent the reverse inflow or outflow of such venting gas, a flange part 300F according to the present embodiment may be provided. Since the flange part 300F is inserted into the venting flow path of the venting channel VC while passing through the opening part 1151P, the high-temperature gas or flame that flows into any one of the venting channels VC does not flow out through a gap between the venting hole 300VH and the opening part 1151P. Therefore, even if a thermal event occurs in any one of the battery cells 110, the propagation of such a thermal event to other battery cells 110 can be minimized. Ultimately, it is possible to prevent the flame from spreading to the whole of the battery assembly 100 and battery pack 1000.

Meanwhile, in the battery assembly 100, the battery cell 110 may be spaced apart from the venting hole 300VH or the lower surface of the lower frame 320 by a predetermined distance. As an example, the battery cell 110 may be spaced apart from the venting hole 300VH or the lower surface of the lower frame 320 by a distance of 0.5 mm or more. If the battery cell 110 is attached to the venting hole 300VH or the lower frame 320 or is spaced apart by a distance of less than 0.5 mm, the battery cell 110 may be damaged by vibration or impact.

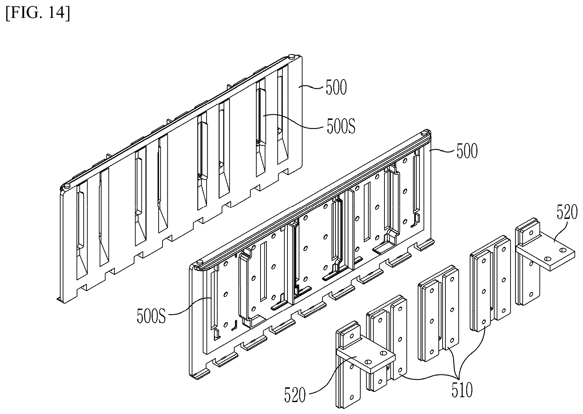

FIG. 14 is a perspective view showing a busbar frame and a busbar according to certain embodiments of the present disclosure. In particular, two busbar frames 500 are shown in FIG. 14, and in the busbar frame 500 located on the right side, a state in which a busbar 510 and a terminal busbar 520 are separated from the busbar frame 500 is shown.

Referring to FIGS. 4, 5 and 14, in the battery cell stack 110A, the busbar frame 500 may be arranged on one surface or both surfaces in the direction in which the electrode leads 111 protrude. As an example, in the battery cell 110 according to the present embodiment, the electrode leads 111 (see FIG. 7) may protrude in both directions, i.e., in the y-axis direction and the -y-axis direction. Thereby, the busbar frame 500 may be arranged on both surfaces of the battery cell stack 110A in the y-axis direction and the -y-axis direction.

A busbar 510 and a terminal busbar 520 may be mounted on the surface of the busbar frame 500 opposite to the surface facing the battery cell stack 110A. The electrode lead 111 may pass through a slit 500S formed in the busbar frame 500 and then be bent to be connected to the busbar 510 or the terminal busbar 520. The form in which the electrode lead 111 is connected to the busbar 510 or the terminal busbar 520 is not particularly limited as long as an electrical connection is possible, and as an example, a welding joint may be performed. The battery cells 110 in the battery cell stack 110A may be electrically connected to each other using the busbar 510. Meanwhile, as shown in FIG. 4, a portion of the terminal busbar 520 is exposed to the outside of the module frame 300. The battery assembly 100 forms an HV connection with the other battery assembly or electrical component through the terminal busbar 520. As mentioned above, since the battery pack 1000 according to the present embodiment has a "bottom vent" structure, it is possible to minimize the influence of high-temperature gas, particles or flames on high-voltage paths such as HV connections of terminal busbars 520.

Specific configurations of the pack housing and the venting channels are described in detail below.

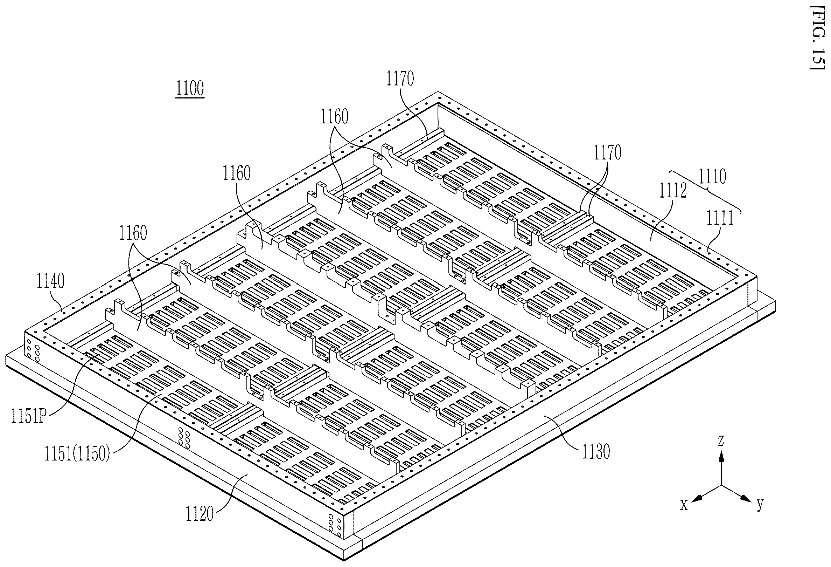

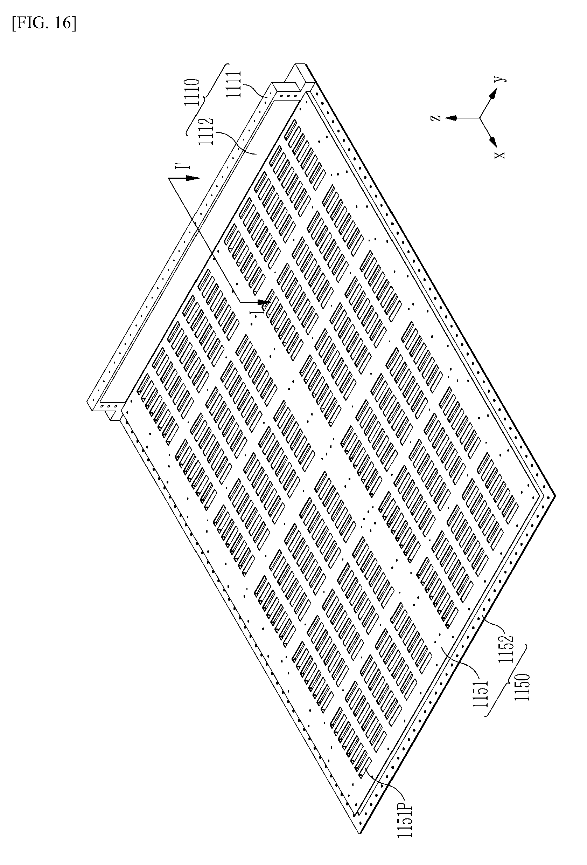

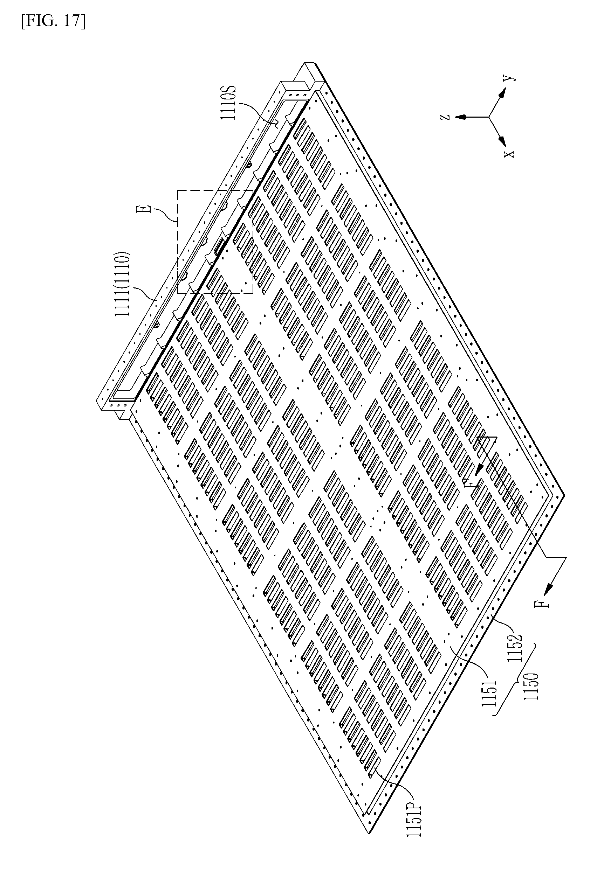

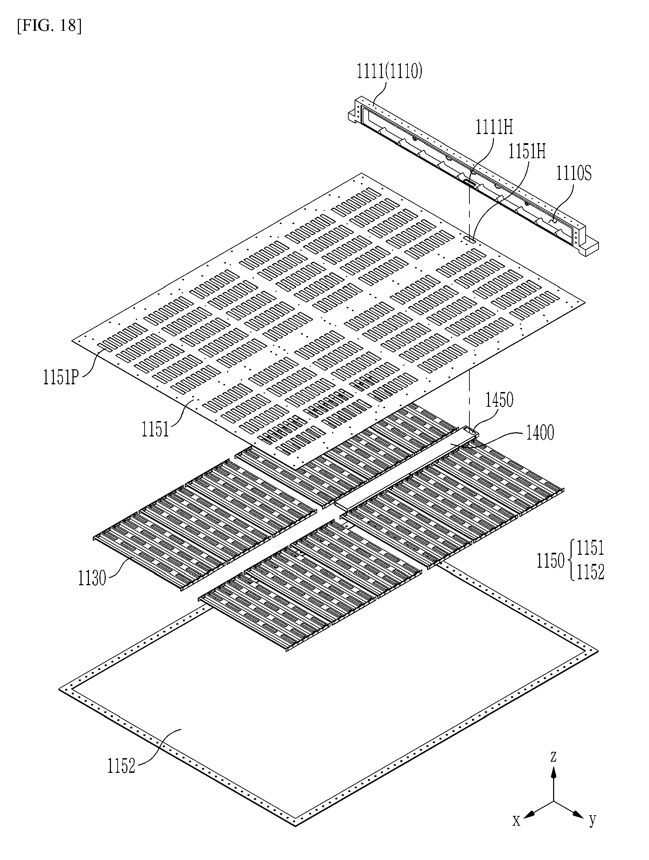

FIG. 15 is a perspective view showing a pack housing included in a battery pack according to certain embodiments of the present disclosure. FIG. 16 is a perspective view showing only the first side frame and the bottom frame among the pack housings according to certain embodiments of the present disclosure. FIG. 17 is a perspective view showing a state in which the inner frame of the first side frame in FIG. 16 is removed. FIG. 18 is an exploded perspective view of the first side frame and the bottom frame in FIG. 17.

Referring to FIGS. 1, 2 and FIGS. 15 to 18, the pack housing 1100 according to certain embodiments of the present disclosure may be a housing having an opening upper part. The pack housing 1100 may include a bottom frame 1150 on which the battery assembly 100 is placed, and side parts 1110, 1120, 1130 and 1140 extending along the edge of the bottom frame 1150. As an example, the pack housing 1100 may include a first side part 1110, a second side part 1120, a third side part 1130, a fourth side part 1140, and a bottom frame 1150. The first to fourth side parts 1110, 1120, 1130 and 1140 may be arranged along the four sides of the edge of the bottom frame 1150 having a square shape. The battery assembly 100 may be seated in the inner space formed by the bottom frame 1150 and the first to fourth side parts 1110, 1120, 1130 and 1140.

In addition, the open upper part of the pack housing 1100 may be covered by the pack cover 1200. Although not specifically shown in the figure, a gasket for enhancing sealing performance may be interposed between the first to fourth side parts 1110, 1120, 1130 and 1140 of the pack housing 1100 and the pack cover 1200.

Further, a cross beam 1160 and a fixed beam 1170 may be located on the bottom frame 1150 to define an area where the battery assemblies 100 are placed, and to fix the battery assemblies 100. The cross beam 1160 may be located in parallel to the first and second side parts 1110 and 1120, and the fixed beam 1170 may be located in parallel to the third and fourth side parts 1130 and 1140.

The bottom frame 1150 according to the present embodiment may include a venting plate 1151 on which the battery assemblies 100 are placed, and a lower plate 1152 located below the venting plate 1151. A venting unit 1300 may be located between the venting plate 1151 and the lower plate 1152, and the above-mentioned venting channels VC may be formed in this venting unit 1300.

In the battery pack structure of "bottom vent", the space between the venting plate 1151 and the lower plate 1152 is utilized as a space through which gas or flame flows, i.e., a venting channel VC is formed. Furthermore, the venting unit 1300 can be realized as a venting channel VC of independent venting flow paths that are not shared between these spaces. Further, the above-mentioned opening part 1151P can be formed in the venting plate 1151 of the bottom frame 1150. That is, the venting plate 1151 may include an opening part 1151P formed in a portion corresponding to the venting hole 300VH of the battery assembly 100, and the venting hole 300VH may be communicated with the venting channel VC through the opening part 1151P. The opening part 1151P can be provided by opening at least a part of the area of the venting plates 1151 that corresponds to the venting channel VC. The number or area of the opening part 1151P are not particularly limited. The flange part 300F provided on the outer circumference of the venting hole 300VH may be inserted into the venting flow path of the venting channel VC while passing through the opening part 1151P of the floor frame 1150.

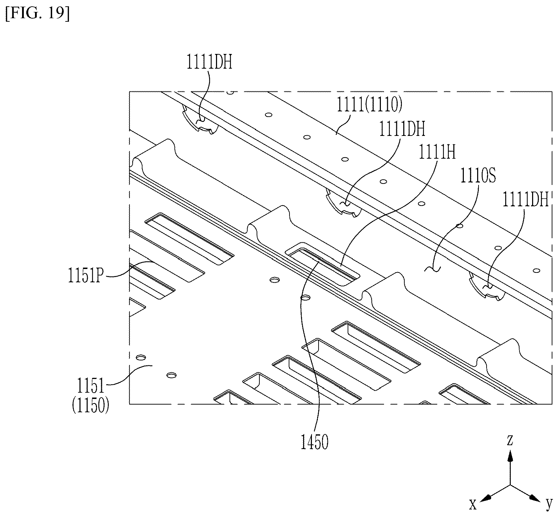

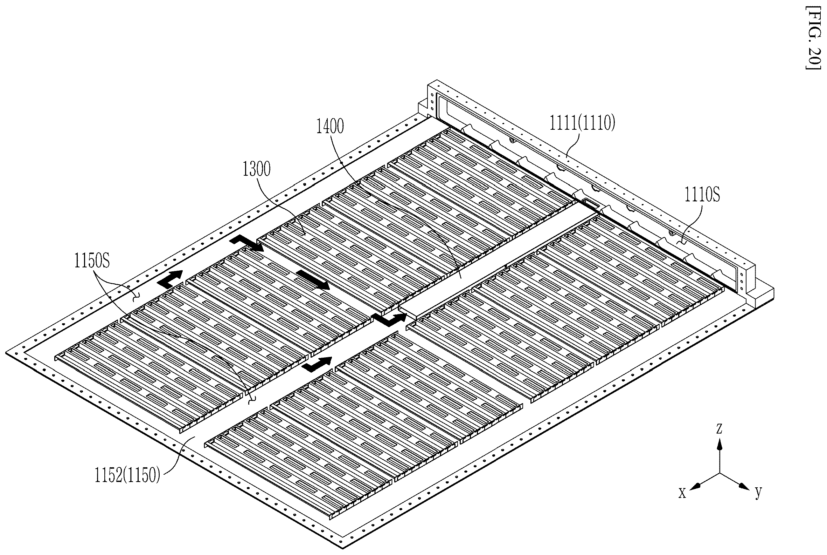

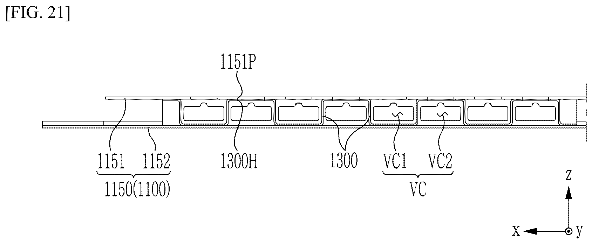

FIG. 19 is a partially enlarged perspective view showing a section "E" in FIG. 17. FIG. 20 is a perspective view showing a state in which the venting plate is removed in FIG. 17. FIG. 21 is a cross-sectional view showing a cross section taken along the cutting line F-F' of FIG. 17.

Referring to FIGS. 16 to 21, in the bottom frame 1150, a venting space 1150S may be provided between the venting plate 1151 and the lower plate 1152, and the pack housing 1100 may include a discharge part 1111DH that communicates with the venting space 1150S. The discharge part 1111DH may be an open hole formed in the pack housing 1100, or a structure in which a venting device is coupled to the hole. Here, the venting device refers to a structure that opens when the internal pressure reaches a certain level or higher, and discharges internal gas, and the like.

Specifically, the venting space 1150S may be a space excluding the venting channels VC between the venting plate 1151 and the lower plate 1152. The venting space 1150S may correspond to a space excluding the venting unit 1300 between the venting plate 1151 and the lower plate 1152. In addition, the venting space 1150S may be a space through which gas or particles discharged from the venting channels VC of the venting unit 1300 flow between the venting plate 1151 and the lower plate 1152. Referring to the arrows in FIG. 20, gas or particles discharged from the venting channel VC of the venting unit 1300 may flow along the venting space 1150S between the venting plate 1151 and the lower plate 1152 and then flow into the venting extension part 1400 described below. The gas flowing into the venting extension part 1400 is discharged to the outside of the battery pack through the discharge part 1111DH formed in the pack housing 1100 and communicated with the venting space 1150S.

The position of the discharge part 1111DH formed in the pack housing 1100 is not particularly limited as long as it can communicate with the venting space 1150S.

As an example, an inner hollow 1110S that communicates the discharge part 1111DH and the venting space 1150S to each other may be provided in any one of the side parts 1110, 1120, 1130 and 1140. The discharge part 1111DH and the inner hollow 1110S formed in the first side part 1110 will be described below as an example.

The first side part 1110 according to the present embodiment may include an outer frame 1111 and an inner frame 1112. Both the outer frame 1111 and the inner frame 1112 are shown in FIG. 16, and only the outer frame 1111 is shown in FIG. 17.

The first side part 1110 may include an inner hollow 1110S provided therein. The inner hollow 1110S may be formed between the outer frame 1111 and the inner frame 1112. The outer frame 1111 may be formed with an outer frame hole 1111H (see FIGS. 18 and 19) communicating with the inner hollow 1110S, and the venting plate 1151 may be formed with a through hole 1151H (see FIG. 18) communicating with the outer frame hole 1111H. That is, the venting space 1150S between the venting plate 1151 and the lower plate 1152 can be communicated with the inner hollow 1110S of the first side part 1110 through the through hole 1151H and the outer frame hole 1111H.

That is, high-temperature gas or particles flowing along the venting space 1150S may be flowed into the inner hollow 1110S through the through hole 1151H and the outer frame hole 1111H. The discharge part 1111DH can be formed in the outer frame 1111 among the first side parts 1110. The high-temperature gas or particles flowing into the inner hollow 1110S can be finally discharged to the outside of the battery pack 1000 through the discharge part 1111DH.

Taken together, gas or particles generated due to a thermal event in any one of the battery cells 110 sequentially pass through the venting channel VC and venting space 1150S of the venting unit 1300 to be discharged to the outside via the discharge part 1111DH. More specifically, the gas or particles may flow along the venting channel VC and the venting space 1150S of the venting unit 1300, then pass through the inner hollow 1110S of the first side part 1110, and then be discharged through the discharge part 1111DH. However, as mentioned above, the discharge part 1111DH being formed in the first side part 1110 is merely one example of the present disclosure, and it goes without saying that it may be formed in other configurations of the pack housing 1100.

At this time, the gas or particles may flow while being bent at least once in the venting space 1150S, as in the arrow of FIG. 20. Some gases or particles may flow along a long path while being bent multiple times in the venting space 1150S. In the case of the battery pack 1000 according to the present embodiment, high-temperature gases, particles or the like that have passed through the venting channel VC of the venting unit 1300, may not be discharged immediately through the discharge part 1111DH, but may flow to some extent along the separately provided venting space 1150S and then be discharged. In particular, some gases or particles may flow along the edge portions of the venting units 1300 in the venting space 1150S for a long time and then be discharged through the discharge part 1111DH. That is, in the present embodiment, in addition to the vent channel VC, a venting space 1150S is provided separately, thereby securing a long venting flow path through which high-temperature gas, particles, etc. move inside the battery pack 1000. While high-temperature gas or particles move along the long venting flow path, the temperature of the gas or particles can be lowered. Therefore, it is possible to prevent the gas or particles from triggering an explosion. In addition, as the venting flow path becomes longer, it is possible to block oxygen flowing in from the outside of the battery pack 1000 from encountering gases or the like, ultimately preventing an explosion. In addition, in the long venting flow path, the gas or particles may flow while being bent multiple times. Thereby, large particles can be filtered in the venting flow path.

The structure of the venting unit and the rupture part according to the present embodiment will be described in detail below.

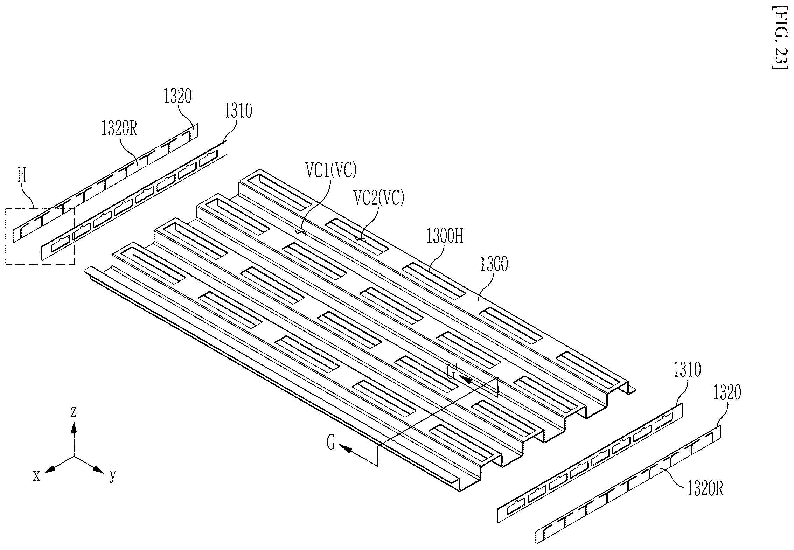

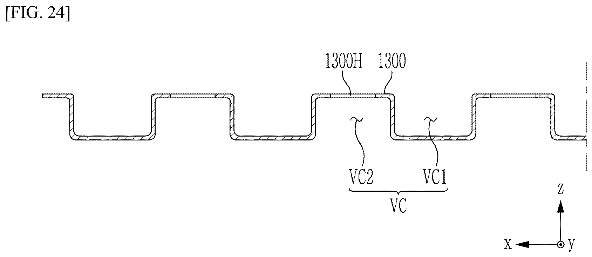

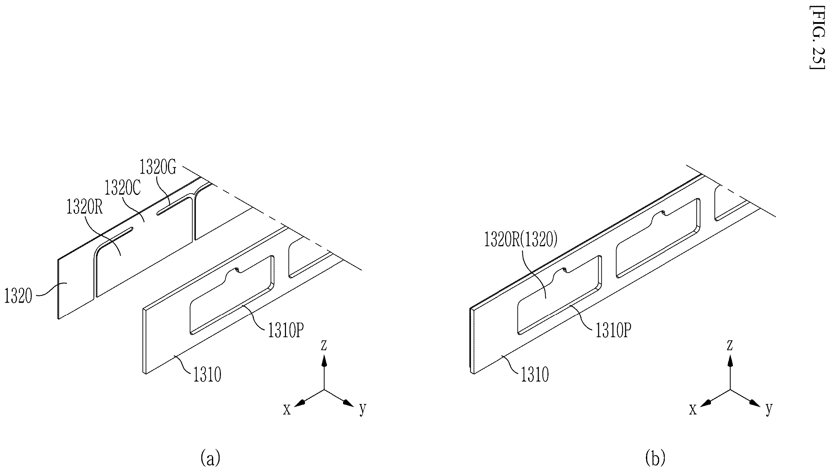

FIG. 22 is a perspective view showing a venting unit, a venting channel plate, and a venting flap according to certain embodiments of the present disclosure. FIG. 23 is an exploded perspective view of a venting unit, a venting channel plate, and a venting flap in FIG. 22. FIG. 24 is a cross-sectional view showing a cross section taken along the cutting line G-G' of FIG. 23. FIGS. 25(a) and (b) are partial diagram showing a state in which the venting channel plate and the venting flap of FIG. 23 are combined and a state in which they are separated from each other, respectively.

Referring to FIGS. 2, 17, and FIGS. 21 to FIG. 25, the venting channels VC described above may be formed in the venting unit 1300 as mentioned above. Moreover, the venting channels VC may extend along the longitudinal direction of the battery cells 110, which is perpendicular to the direction in which the battery cells 110 are stacked. Here, the direction in which the battery cells 110 are stacked may be a direction parallel to the x-axis, and the longitudinal direction of the battery cells 110 perpendicular thereto may be a direction parallel to the y-axis, which is the direction in which the electrode leads 111 (see FIG. 7) protrude from the battery cells 110. In this way, the extension direction of the venting channel VC must be the same as the longitudinal direction of the battery cell 110, so that gas or particles generated in any one of the battery cell 110 can flow only through one venting channel VC located at a lower part of the battery cells 110. Thereby, a thermal event or thermal runaway generated in any one of the battery cells 110 may not be propagated to other battery cells 110. If the extension direction of the venting channel VC is perpendicular to the longitudinal direction of the battery cell 110, any one of the venting channel VC shares space with all battery cells 110 in the battery cell stack 110A, and a thermal event or thermal runaway generated in any one of the battery cells 110 can easily be propagated to other battery cells 110 through the venting channel VC.

Meanwhile, if the venting channels VC each have independent venting flow paths that are not shared with each other, the shape of the venting unit 1300 is not particularly limited, however, as an example, the venting unit 1300 may be in a form in which the plate materials are extended in a zigzag manner so that the upper opening area VC1 of the venting channel VC and the lower opening area VC2 of the venting channel VC are alternately located along the direction in which the battery cells 110 are stacked.

Specifically, the venting unit 1300 in which the plate materials are extended in a zigzag manner is disposed between the venting plate 1151 and the lower plate 1152, thereby forming mutually independent venting channels VC therebetween. The space between the venting plate 1151 and the lower plate 1152 can be utilized as a space where gas or flame flows, i.e., the venting channel VC is formed. That is, the venting unit 1300 in which the plate materials are extended in a zigzag manner can make a space between the venting plate 1151 and the lower plate 1152 as venting channels VC that are independent vent flow paths that are not shared with each other.

More specifically, any one venting channel VC may be formed when the upper opening area VC1 is covered by the venting plate 1151, and the other venting channel VC may be formed when the lower opening area VC2 is covered by the lower plate 1152.

That is, in the venting unit 1300 according to the present embodiment, the venting channel VC formed by covering the upper opening area VC1 by the venting plate 1151, and the venting channel VC formed by covering the lower opening area VC2 by the lower plate 1152 can be alternately located. Meanwhile, in the case of the upper opening area VC1, it can be directly communicated with the opening part 1151P of the venting plate 1151, however, in the case of the lower opening area VC2, it is covered by the venting unit 1300. Therefore, a separate inflow hole 1300H may be formed in the venting unit 1300 portion corresponding to the lower opening area VC2. That is, the lower opening area VC2 can be communicated with the opening part 1151P of the venting plate 1151 through the inflow hole 1300H formed in the venting unit 1300.

As mentioned above, in the present disclosure, if the venting channels VC each have independent venting flow paths that are not shared with each other, the shape of the venting unit 1300 is not particularly limited. However, when using a venting unit 1300 in which the plate materials are extended in a zigzag manner as in the present embodiment, there is an advantage in that venting channels VC having independent venting flow paths can be easily realized with only a single plate. Namely, by simply bending the plate into a zigzag pattern, a partition structure can be easily formed between the venting channels VC. In addition, by simply arranging the venting plate 1151 and the lower plate 1152 above and below such a plate material, multiple venting channels VC can be easily realized.

Meanwhile, according to the present embodiment, at least one of the two ends of the venting channel VC may be provided with a rupture part 1320R having a structure that ruptures at a prescribed pressure or higher. Specifically, a venting channel plate 1310 and a venting flap 1320 may be arranged at both ends of the venting unit 1300, particularly at both ends along the direction in which the venting channel VC extends. In a general state where no thermal event occurs, both ends of the venting channels VC are blocked by the venting channel plate 1310 and the venting flap 1320. The rupture part 1320R having a structure that ruptures at a prescribed pressure or higher may be formed in the venting flap 1320.

Specifically, a venting channel plate 1310 may be located at both ends of the venting unit 1300, and a venting flap 1320 may be located on the outer surface of the venting channel plate 1310. A venting channel opening part 1310P may be formed in a portion corresponding to the venting channel VC among the venting channel plate 1310. The venting channel VC may face the rupture part 1320R through the venting channel opening part 1310P.

Further, a groove 1320G may be formed around the rupture part 1320R except for the connection part 1320C. In other words, a rupture part 1320R may be provided in the venting flap 1320 in such a manner that a groove 1320G in a perforated shape except only the connection part 1320C is formed in the venting flap 1320. Additionally, as shown in FIGS. 25(a) and (b), the groove 1320G of the venting flap 1320 is covered by the venting channel plate 1310 when viewed from the venting channel VC. In other words, the venting channel opening part 1310P is formed in an inner area than the groove 1320G of the venting flap 1320, so that when viewed from the venting channel VC, only the rupture part 1320R is exposed through the venting channel opening part 1310P, and the groove 1320G is not exposed.

Thus, in a general state where no thermal event occurs, both ends of the venting channel VC may not be communicated with the perforated groove 1320G, but may be blocked by the rupture part 1320R of the vent flap 1320. Therefore, in a general state where no thermal event occurs, the venting channels VC may be blocked from the venting space 1150S (see FIG. 20) by the rupture part 1320R. That is, in a general state where no thermal event occurs, the venting channels VC may have independent venting flow paths that are not shared with the venting space 1150S and are not shared with each other.

When gas or the like flows into a venting channel VC and the internal pressure increases, the rupture part 1320R may rupture. Specifically, if the increased internal pressure of the venting channel VC exceeds the limit strength of the connection part 1320C, the connection part 1320C may break, and the rupture part 1320R may be separated from the venting flap 1320. Thereby, the venting channel VC is opened, and the gas within the venting channel VC may be discharged to the venting space 1150S. Since the other venting channels VC are still blocked from the venting space 1150S by the rupture part 1320R, gas, particles or the like do not flow into the inside. That is, due to the structure of the rupture part 1320R, the venting channels VC can each have independent venting flow paths that are not shared with each other, and it is possible to minimize the propagation of a thermal event or thermal runaway occurring in a specific battery cell to other battery cells.

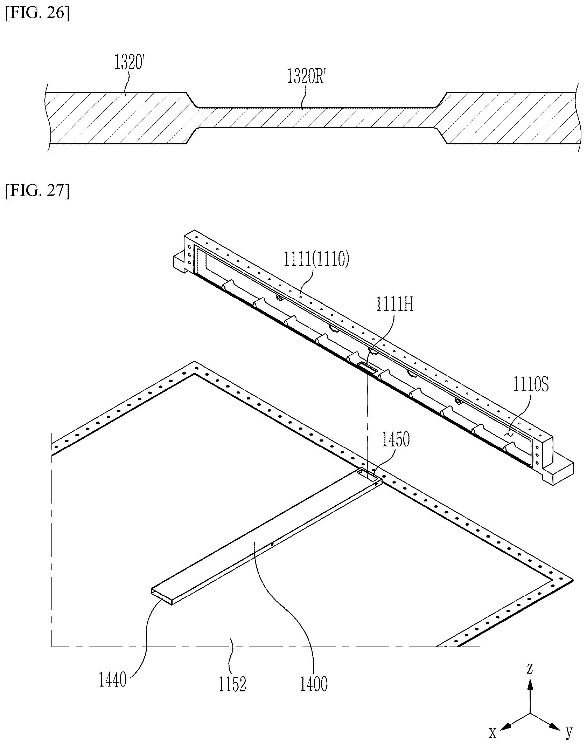

FIG. 26 is a partial drawing showing a rupture part according to certain other embodiments of the present disclosure. Referring to FIG. 26, a venting flap 1320' according to certain other embodiments of the present disclosure may be disposed in at least one of the two ends of the venting channel VC. At this time, a rupture part 1320R' having a structure that ruptures at a prescribed pressure or higher may be formed in the venting flap 1320'. This rupture part 1320R' may be located at a position corresponding to the venting channel. The rupture part 1320R' according to the present embodiment has a different shape from the rupture part described above, and thus may be a portion having a thinner thickness than other portions of the venting flap 1320'. When the internal pressure of the venting channel VC exceeds the limit strength of the rupture part 1320R' having a relatively thin thickness, the rupture part 1320R' may be torn or punctured, and the gas inside the venting channel VC may be discharged to the venting space 1150S.

The rupture parts 1320R and 1320R' described above are exemplary structures that can perform a function of blocking the venting channel VC in a normal time, but can rupture when the internal pressure of the venting channel VC exceeds a prescribed level, and the present disclosure is not necessarily limited to the structure of these rupture parts 1320R and 1320R'.

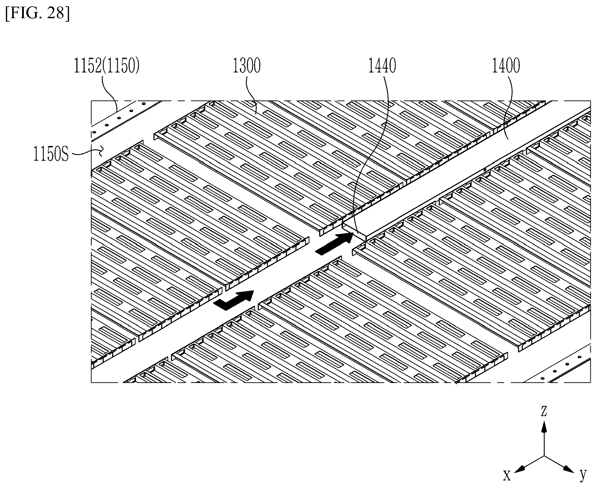

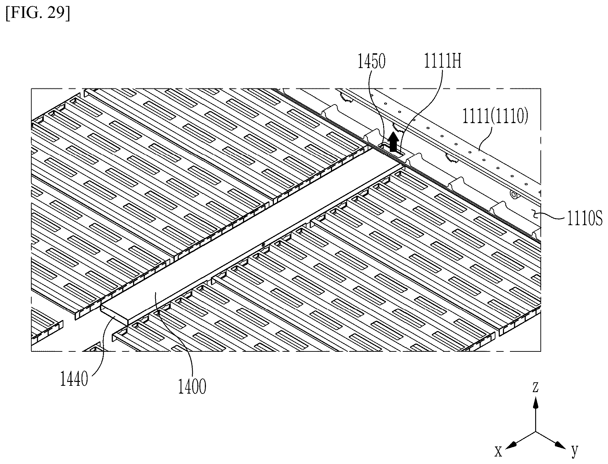

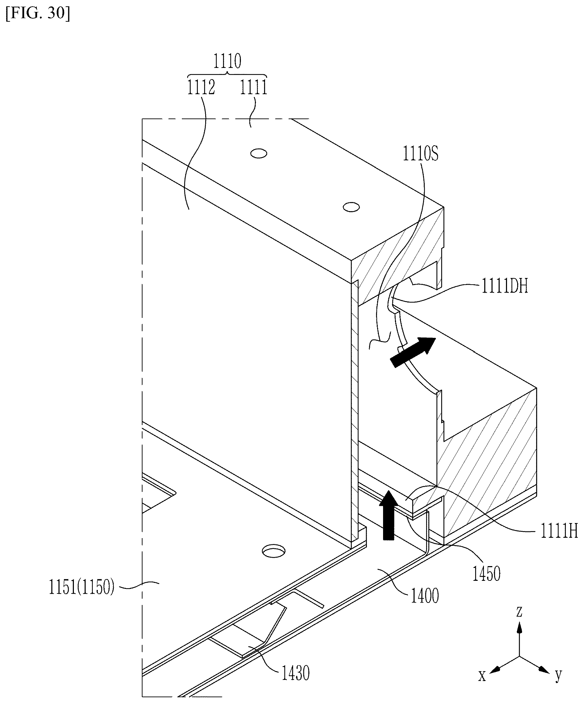

FIG. 27 is a perspective view showing an outer frame of the first side part, a venting extension part, and the lower plate of the bottom frame according to certain embodiments of the present disclosure. FIGS. 28 and 29 are perspective views showing the path along which gas or flame discharged from the venting unit moves according to certain embodiments of the present disclosure. FIG. 30 is a cross-sectional perspective view taken along the cutting line I-I' of FIG. 16.

Referring to FIGS. 16, 18, and FIGS. 27 to 30, gas and particles that have flowed into the venting space 1150S can be discharged to the outside of the battery pack through the discharge part 1111DH that communicates with the venting space 1150S, as mentioned above. In certain embodiments of the present disclosure, the discharge part 1111DH and the inner hollow part 1110S can be formed in the first side part 1110 as mentioned above. The inner hollow part 1110S may be formed inside the first side part 1110. The outer frame 1111 of the first side part 1110 may be formed with an outer frame hole 1111H (see FIGS. 18 and 19) communicating with the inner hollow 1110S, and the venting plate 1151 may be formed with a through hole 1151H (see FIG. 18) communicating with the outer frame hole 1111H. A venting space 1150S between the venting plate 1151 and the lower plate 1152 may be communicated with the inner hollow 1110S of the first side part 1110 through the through hole 1151H and the outer frame hole 1111H.

According to the present embodiment, a venting extension part 1400 communicating with the discharge part 1111DH may be located in the venting space 1150S. The venting extension part 1400 communicating with the discharge part 1111DH may be located between the venting plate 1151 and the lower plate 1152. The venting extension part 1400 may be a tubular member having an inflow port 1440 and a discharge port 1450. The venting extension part 1400 may be a tubular member extending from the inflow port 1440 to the discharge port 1450. As an example, a venting extension part 1400 having a rectangular tubular shape is shown in FIG. 18 and FIGS. 27 to 30.

The inflow port 1440 of the venting extension part 1400 may be located in the venting space 1150S. The inflow port 1440 of the venting extension part 1400 may be located in the venting space 1150S between the venting plate 1151 and the lower plate 1152. Additionally, the discharge port 1450 of the venting extension part 1400 may be communicated with the discharge part 1111DH. The discharge port 1450 of the venting extension part 1400 may be communicated with the through hole 1151H of the venting plate 1151 and the outer frame hole 1111H of the first side part 1110.

As shown in FIG. 28, high-temperature gas, and the like discharged from the venting unit 1300 may flow at the venting space 1150S and then flow into the inside of the venting extension part 1400 through the inflow port 1440 of the venting extension part 1400. As shown in FIGS. 29 and 30, high-temperature gas, and the like that have moved along the inside of the venting extension part 1400 may pass through the discharge port 1450, the through hole 1151H of the venting plate 1151, and the outer frame hole 1111H in sequence, and flow into the inner hollow 1110S of the first side part 1110. Subsequently, the gas, and the like may be discharged to the outside of the battery pack through the discharge part 1111DH. That is, the venting extension part 1400 according to the present embodiment can function as a venting passage connecting the venting space 1150S and the discharge part 1111DH.

The venting extension part 1400 may be located adjacent to an area where the discharge part 1111DH is formed among the pack housing 1100. The venting extension part 1400 may be located adjacent to the first side part 1110 where the discharge part 1111DH is formed. The venting extension part 1400 may be located adjacent to the first side part 1110 where the discharge part 1111DH is formed among the first side part 1110, the second side part 1120, the third side part 1130, and the fourth side part 1140 of the pack housing 1100. As mentioned above, the discharge port 1450 of the venting extension part 1400 may be communicated with the outer frame hole 1111H of the first side part 1110 and may be communicated with the discharge port 1111DH.

Gas or particles generated due to a thermal event of the battery assembly 100 within the battery pack 1000 may flow into the venting space 1150S through the venting channel VC.

At this time, if a thermal event occurs in the battery assembly 100 located far from the discharge part 1111DH, the long venting flow path for gas or particles flowing into the venting space 1150S to move to the discharge part 1111DH can be secured. While the high-temperature gas or particles move along the long venting flow path, the temperature of the gas or particles may be lowered

On the other hand, in a state of having no venting extension part 1400, if a thermal event occurs in the battery assembly 100 located close to the discharge part 1111DH, gas or particles flowing into the venting space 1150S will immediately move to the discharge part 1111DH. That is, it is not possible to secure a long venting flow path for the gas or particles flowing into the venting space 1150S to move to the discharge part 1111DH. Thereby, the gas or particles may be discharged to the outside through the discharge part 1111DH at a high temperature, encounter with external oxygen or gas, and eventually cause an explosion.

Thus, in the present embodiment, a venting extension part 1400 communicating with the discharge part 1111DH is provided in the venting space 1150S, and therefore, when a thermal event occurs in the battery assembly 100 located close to the discharge part 1111DH, it is intended to secure a long venting flow path for gas or particles to move to the discharge part 1111DH. That is, gas or particles flowing into the venting space 1150S do not immediately move to the discharge part 1111DH, but move along the venting space 1150S up to the inflow port 1440 of the venting extension part 1400 and then flow along the inside of the venting extension part 1400, and reach the discharge part 1111DH for the first time. While the gas or particles move along this long venting flow path, the temperature of the gas or particles may decrease. Therefore, it is possible to prevent the gas or particle from triggering an explosion. In addition, as the venting flow path becomes longer, oxygen flowing in from the outside of the battery pack 1000 can be blocked from encountering the gas or the like, ultimately preventing an explosion from occurring. Further, in the longer venting flow path, the gas or particle can flow while being bent multiple times. Thereby, large particles can be filtered in the venting flow path.

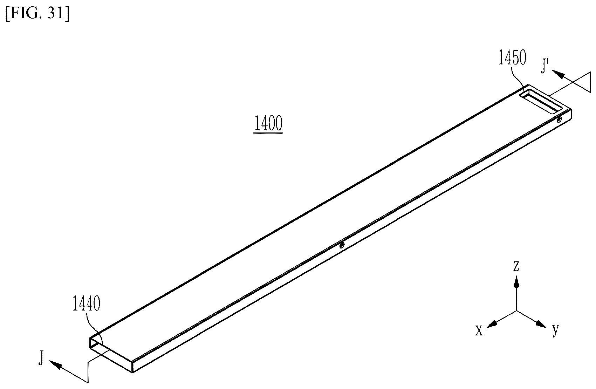

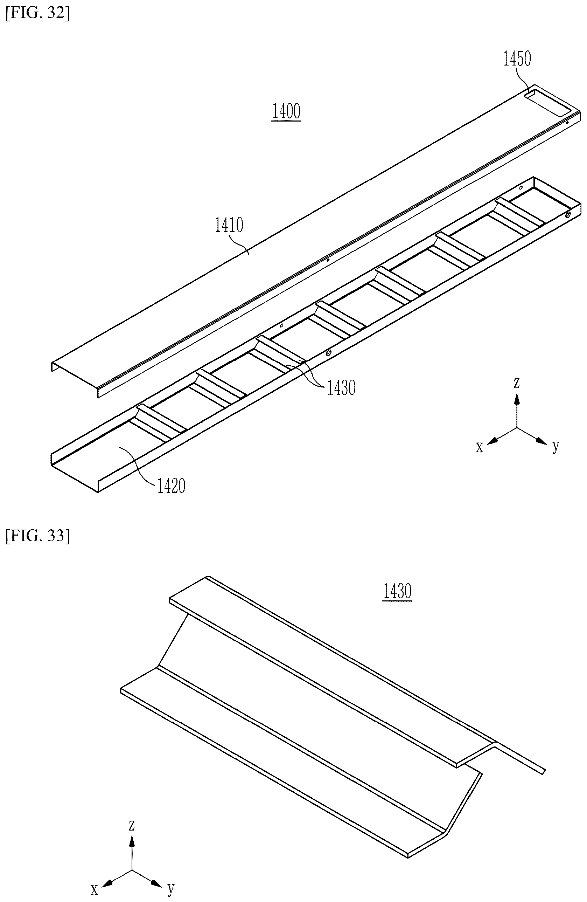

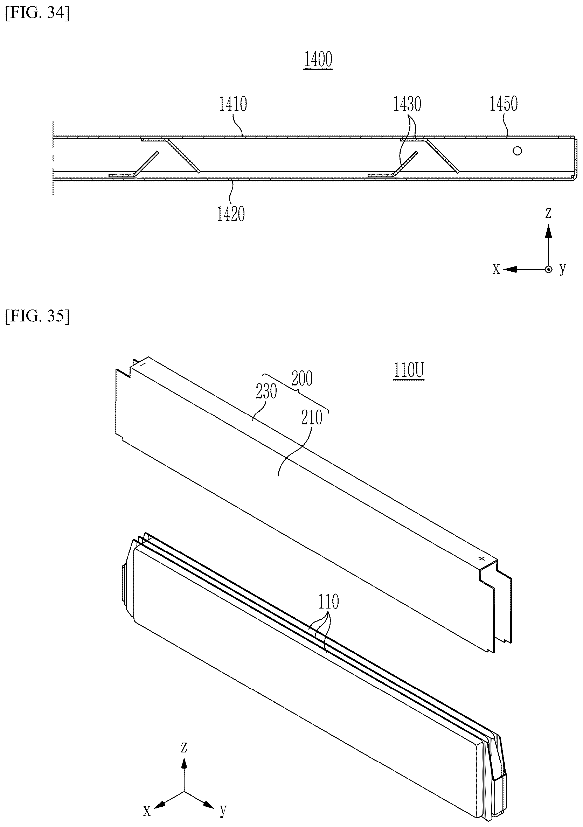

FIG. 31 is a perspective view showing a venting extension part according to certain embodiments of the present disclosure. FIG. 32 is an exploded perspective view of the venting extension part of FIG. 31. FIG. 33 is a perspective view showing a labyrinth bracket included in the venting extension part of FIG. 31. FIG. 34 is a cross-sectional view showing a cross section taken along the cutting line J-J' of FIG. 31.

Referring to FIGS. 30 to 34, the venting extension part 1400 according to certain embodiments of the present disclosure may be a tubular member as mentioned above. The flow paths being bent and extended in a plural number may be formed in the inner space of the vent extension part 1400. The venting extension part 1400 may be an ash tray assembly. Labyrinth brackets 1430 may be arranged in the inner space of the venting extension part 1400. By such labyrinth brackets 1430, the inner space of the venting extension part 1400 may become a path having a complex path rather than a simple straight path.

The venting extension part 1400 may include an upper tray 1410 and a lower tray 1420. The upper tray 1410 may have a structure in which a lower part is opened, including two side surfaces and an upper surface. The lower tray 1420 may have a structure in which the upper part is open, including two side surfaces and a lower surface. The upper tray 1410 and the lower tray 1420 may be coupled while joining their side surfaces to provide a venting extension part 1400 having an inner space. The labyrinth bracket 1430 may have a plate shape having an oblique inclination. The labyrinth bracket 1430 is arranged in the inner space of the venting extension part 1400, so that a flow path being bent and extended in a plural number may be formed in the inner space of the venting extension part 1400. The shape, size, and number of the labyrinth bracket 1430 are not particularly limited as long as it can form a flow path being bent in plural directions.

In the present embodiment, a venting extension part 1400 is provided in the path through which high-temperature gas or the like moves from the venting space 1150S to the discharge part 1111DH. The labyrinth bracket 1430 inside the venting extension part 1400 can function as a kind of labyrinth or trap that filters out sparks or particles. That is, when high-temperature gas passes through the venting extension part 1400 having a complex internal path, large sparks or particles, etc., moving together with the gas are blocked by the labyrinth bracket 1430 and are ultimately not discharged through the discharge part 1111DH. That is, by preventing the sparks or particles from flowing out to the outside, an explosion caused by the battery pack 1000 can be prevented. Further, in the case of a flame with a strong straight tendency, the flame intensity may be reduced as it passes through the path of the venting extension part 1400 that is bent and extended in a plural number.

FIG. 35 is an exploded perspective view showing a battery cell unit according to certain other embodiments of the present disclosure.

Referring to FIG. 35, a battery cell unit 110U according to certain other embodiments of the present disclosure may include at least one battery cell 110 and a cell cover 200 that partially wraps around the at least one battery cell 110. The cell cover 200 according to the present embodiment may include side parts 210 that cover one side surface of the battery cell 110. In addition, the cell cover 200 may include an upper surface part 230 that connects the side surface parts 210 and covers the upper part of at least one battery cell 110.

The cell cover 200 according to the present embodiment may include two side surface parts 210 and one upper surface part 230. One surface of the side surface parts 210 and one surface of the upper surface part 230 may be vertical, and the side surface parts 210 may extend downward from both opposing surfaces of the upper surface part 230, respectively. The cell cover 200 according to the present embodiment may have a configuration in which a lower side is open. That is, when the cell cover 200 is cut along the xz plane in FIG. 35, the cell cover 200 may exhibit an 'n' shape. The cell cover 200 may be arranged to wrap around at least a part of three of the four surfaces of the six-sided battery cell 110 excluding two surfaces where the electrode leads 111 are formed.

Unlike the cell covers described in FIGS. 9 and 10, the cell cover 200 according to the present embodiment has a configuration in which a lower side is open, so the cell cover venting hole 220H is unnecessary. The portion opened on the lower side of the cell cover 200 can communicate with the venting hole 300VH formed at the lower surface of the battery assembly 100. Gases or particles generated from the battery cell 110 can move to the opened lower side of the cell cover 200 and then flow into the venting channel VC through the venting hole 300VH.

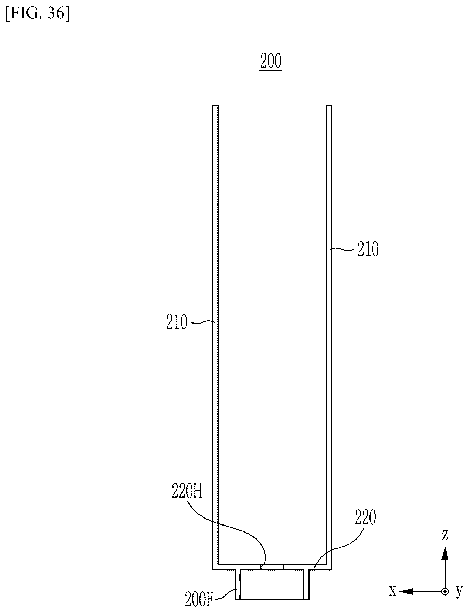

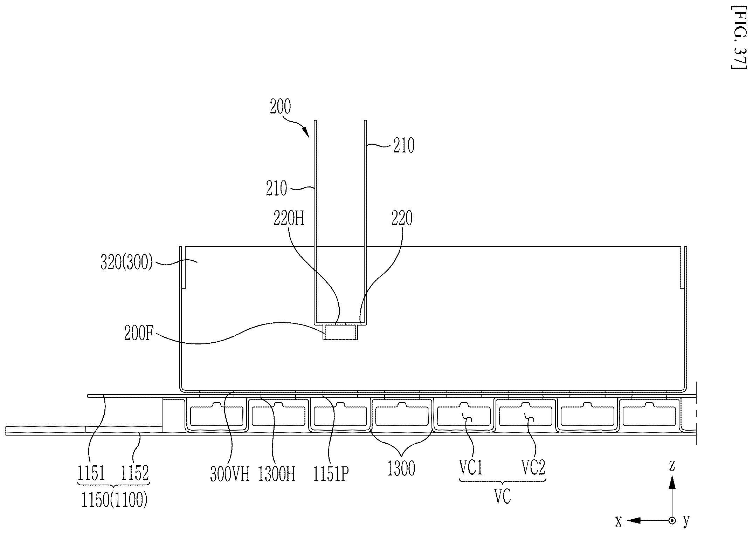

FIG. 36 is a cross-sectional view of a cell cover according to certain other embodiments of the present disclosure. FIG. 37 is a cross-sectional view of a battery pack to which the cell cover of FIG. 36 is applied.

Referring to FIGS. 36 and 37, a cell cover 200 according to certain other embodiments of the present disclosure may include a side surface part 210 the covers one side surface of a battery cell and a lower surface part 220 that connects the side surface part 210 and covers the lower part of at least one battery cell 110. Further, a cell cover venting hole 220H may be formed in the lower surface part 220 of the cell cover 200. The configuration in which the cell cover 200 according to the present embodiment includes the side surface parts 210 and the lower surface part 220 and the cell cover venting hole 220H is formed in the lower surface part 220 is similar to the cell cover described in FIGS. 9 and 10.

However, according to the present embodiment, a cell cover flange part 200F protruding in the direction where the venting channel VC is located may be provided on the outer circumference of the cell cover venting hole 220H, and the cell cover flange part 200F may be inserted into the venting flow path of the venting channel VC. As shown in FIG. 37, the cell cover flange part 200F of the cell cover 200 according to the present embodiment may pass through the venting hole 300VH of the lower frame 320 and the opening part 1151P of the venting plate 1151 and be inserted into the venting flow path of the venting channel VC. In addition, when the cell cover flange part 200F is inserted into the lower opening area VC2, it may further pass through the inflow hole 1300H of the venting unit 1300.

The cell cover flange part 200F according to the present embodiment can perform the function of the flange part 300F described above in FIGS. 11 to 13. That is, in the case of a battery assembly to which the cell cover flange part 200F is applied, the flange part is not formed in the venting hole 300VH.

The cell cover flange part 200F can extend along the outer circumference of the cell cover venting hole 220H and protrude downward. Since the cell cover flange part 200F is inserted into the venting flow path of the venting channel VC while passing through the opening part 1151P, high-temperature gas or flames flowing into any one of the venting channels VC do not flow out through a gap between the venting hole 300VH and the opening part 1151P. Therefore, even if a thermal event occurs in any one battery cell 110, it is possible to minimize the thermal event from spreading to other battery cells 110. Ultimately, it is possible to prevent the flame from spreading to the entire battery assembly 100 and battery pack 1000.

Meanwhile, the battery pack 1000 according to the present embodiment may include a cooling member (not shown) for cooling the battery assembly 100. This cooling member may be located at the upper part of the battery assembly 100. Since a "bottom vent" structure is implemented in which high-temperature gases, particles, or flames generated inside the battery assembly 100 are discharged to the outside using the bottom frame 1150 of the pack housing 1100, the cooling member can be disposed at the upper part and not the lower part of the battery assembly 100.

The shape or type of the cooling member is not particularly limited as long as it is capable of cooling the heat generated in the battery assembly 100. As an example, the cooling member may be a heat sink in which a coolant circulating in it inside flows. In addition, a thermal resin for heat transfer may be located between the cooling member and the battery assembly 100 as needed.

In the embodiments above, expressions indicating directions such as "front," "rear," "left," "right," "up," and "down" have been used. These expressions are used only to facilitate the description, and may vary, for example, depending on the location of a target object or an observer.

One or more battery assemblies according to certain embodiments of the present disclosure described above may be mounted together with various control and protection systems such as a battery management system (BMS), a battery disconnect unit (BDU), and a cooling system, to form a battery pack.

The battery assembly or the battery module may be applied to various devices, which include, for example, transportation vehicles such as electric bicycles, electric vehicles, and hybrids, and energy storage systems (ESS). However, without being limited thereto, the battery modules or the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery assembly
110: battery cell
110U: battery cell unit
110A: battery cell stack
200: cell cover
300: module frame
300F: flange part
1000: battery pack
1100: pack housing
1150: bottom frame
1200: pack cover
1300: venting unit
1400: venting extension part

## Claims

1. A battery pack comprising:
at least one battery assembly including a plurality of battery cells; and
a pack housing that houses the at least one battery assembly,
wherein a plurality of venting channels extending along one direction are formed inside a bottom frame of the pack housing,
wherein a venting hole communicating with the venting channel is formed on a lower surface of the battery assembly, and
wherein the venting channels each have independent venting flow paths that are not shared with each other.

2. The battery pack of claim 1,
wherein at least one of the two ends of the venting channel is provided with a rupture part that is structured to rupture at a prescribed pressure or higher.

3. The battery pack of claim 1,
wherein a flange part protruding in the direction in which the venting channel is located is provided on the outer circumference of the venting hole.

4. The battery pack of claim 1,
wherein the venting channel extends along the longitudinal direction of the battery cell, which is perpendicular to the direction in which the battery cells are stacked.

5. The battery pack of claim 1,
wherein the number of the battery cells is greater than the number of the venting channels.

6. The battery pack of claim 1,
wherein the venting channels are provided so that the venting channels correspond one by one to each unit of battery cells having a capacity of 50 Ah or more and 300 Ah or less.

7. The battery pack of claim 1,
wherein the battery assembly comprises a plurality of battery cell units,
the battery cell unit comprises at least one battery cell and a cell cover that partially wraps around the at least one battery cell, and
the cell cover comprises side surface parts that cover one side surface of the battery cell.

8. The battery pack of claim 7,
wherein each of the venting channels is located so as to correspond to each of the battery cell units.

9. The battery pack of claim 7,
wherein each of the venting channels is communicated one to one with each of the battery cell units.

10. The battery pack of claim 7,
wherein the cell cover comprises a lower surface part that connects the side surface parts and covers the lower part of at least one battery cell, and
the lower surface part is formed with a cell cover venting hole that communicates with the venting hole.

11. The battery pack of claim 10,
wherein a cell cover flange part protruding in the direction in which the venting channel is located is provided on the outer circumference of the cell cover venting hole, and
the cell cover flange part is inserted into the venting flow path of the venting channel.

12. The battery pack of claim 7,
wherein the cell cover comprises an upper face part that connects the side surface parts and covers the upper part of at least one battery cell, and
A portion opened on a lower side of the cell cover communicates with the venting hole.

13. The battery pack of claim 1,
wherein the bottom frame comprises a venting plate on which the battery assembly is placed, and a lower plate located below the venting plate,
the venting channels are formed between the venting plate and the lower plate.

14. The battery pack of claim 13,
wherein the venting plate comprises an opening part formed in a portion corresponding to the venting hole, and
the venting hole communicates with the venting channel through the opening part.

15. The battery pack of claim 14,
wherein a flange part protruding in the direction in which the venting channel is located is provided on the outer circumference of the venting hole, and
the flange part is inserted into the venting flow path of the venting channel while passing through the opening part.

16. The battery pack of claim 13,
wherein a venting unit is located between the venting plate and the lower plate, the venting channels are formed in the venting unit, and
the venting unit has a shape in which the plate materials extend in a zigzag manner, so that the upper opening area and the lower opening area are alternately located along the direction in which the battery cells are stacked.

17. The battery pack of claim 16,
wherein any one of the venting channels is formed while the upper opening area is covered by the venting plate, and
the other venting channels are formed while the lower opening area is covered by the lower plate.

18. The battery pack of claim 13,
wherein a venting space is provided between the venting plate and the lower plate, and
the pack housing comprises a discharge part that communicates with the venting space.

19. The battery pack of claim 18,
wherein the venting space is a space excluding the venting channels between the venting plate and the lower plate.

20. The battery pack of claim 18,
wherein the gas generated in the battery cell passes through the venting channel and the venting space in sequence and is discharged to the outside through the discharge part, and
the gas flows while being bent at least once in the venting space.

21. The battery pack of claim 18,
wherein the pack housing comprises side parts that extend along the edge of the bottom frame, and
any one of the sides is provided with an inner hollow that communicates between the discharge part and the venting space.

22. The battery pack of claim 18,
wherein a venting extension part communicating with the discharge part is located in the venting space.

23. The battery pack of claim 22,
wherein the venting extension part is a tubular member having an inflow port and a discharge port.

24. The battery pack of claim 22,
wherein the inner space of the venting extension part is formed with a flow path that extends while being bent in a plural number.

25. A device comprising the battery pack of claim 1.
